(19) Europäisches Patentamt
European Patent Office
Office européen des brevets

(11) **EP 2 320 692 B1**

(12) **EUROPEAN PATENT SPECIFICATION**

(45) Date of publication and mention
of the grant of the patent:
**19.06.2013 Bulletin 2013/25**

(51) Int Cl.:
**H04W 76/04** (2009.01)

(21) Application number: **09811040.6**

(22) Date of filing: **02.09.2009**

(86) International application number:
**PCT/CN2009/073684**

(87) International publication number:
**WO 2010/025665 (11.03.2010 Gazette 2010/10)**

(54) **SERVICE CONFIGURATION METHOD AND DEVICE**

VERFAHREN UND VORRICHTUNG ZUR DIENSTE-KONFIGURIERUNG

PROCÉDÉ ET DISPOSITIF DE CONFIGURATION DE SERVICE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **04.09.2008 CN 200810215608**

(43) Date of publication of application:
**11.05.2011 Bulletin 2011/19**

(73) Proprietor: **Huawei Technologies Co., Ltd.
Longgang District, Shenzhen
Guangdong 518129 (CN)**

(72) Inventor: **SONG, Ping
Guangdong 518129 (CN)**

(74) Representative: **Thun, Clemens
Mitscherlich & Partner
Patent- und Rechtsanwälte
Sonnenstrasse 33
80331 München (DE)**

(56) References cited:
**WO-A1-2006/040930          WO-A2-2007/025138
CN-A- 1 968 197                  CN-A- 101 179 482
CN-A- 101 360 340            US-A1- 2008 123 548**

• **QUALCOMM EUROPE: "Signalling in support of
DTX/DRX", 3GPP DRAFT; R1-061498, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. Shanghai,
China; 20060502, 2 May 2006 (2006-05-02),
XP050102347, [retrieved on 2006-05-02]**

**Description**

**FIELD OF THE INVENTION**

The present invention relates to the field of wireless communication technologies, and in particular, to a service configuration method and device.

**BACKGROUND OF THE INVENTION**

Discontinuous Transmission/Discontinuous Reception (DTX/DRX) in the Continuous Packet Connectivity (CPC) technology is a very important technical content in the High Speed Packet Access+ (HSPA+). When no service data is transmitted in an uplink of a User Equipment (UE), signals transmitted in an excess uplink Dedicated Physical Control Channel (DPCCH) may increase unnecessary uplink interference, and decrease uplink capacity. Uplink Discontinuous Transmission (UL DTX) can reduce the uplink interference, increase the number of uplink users, make the users always in a Cell Dedicated Channel (CELL_DCH) state, and reduce state transitions of the UE. When no service data is transmitted in a downlink of the UE, it is unnecessary for the UE to continue detecting a High Speed Shared Control Channel (HS-SCCH) to excessively consume power of the UE. Downlink Discontinuous Reception (DL DRX) introduces DL DRX of High Speed Downlink Packet Access (HSDPA), so as to reduce power loss of the UE.

However, after the CPC technology is adopted, due to the limitation of pattern transmission and parameter configuration, when the UE has uplink or downlink service data to be transmitted, a part of transmission time delay will be incurred. When the time delay accumulates to be long, certain data packet loss may be incurred, and Quality of Service (QoS) of services of the UE is degraded.

For example, in the 3rd Generation Partnership Project Release 7 (3GPP R7), services of a UE are set into a DTX/DRX mode, and after the DTX/DRX is adopted, the UE side automatically enters DTX activation/DRX activation, and when no service data is transmitted, transmission of signals in a DPCCH can be reduced to lower an uplink load.

However, the adoption of the DTX/DRX incurs certain time delay, and changes of channel environment may not match the mode, which may affect the QoS of the services.

In the application WO2007/025138A2, techniques for transmitting and receiving data in an efficient manner to potentially improve capacity for a wireless network and achieve power savings for a wireless device are described. The techniques utilize a Continuous Packet Connectivity (CPC) mode comprised of multiple (e.g., two) discontinuous transmission (DTX) modes and at least one (e.g., one) discontinuous reception (DRX) mode. Each DTX mode is associated with different enabled uplink subframes usable for transmission from the wireless device to the network. Each DRX mode is associated with different enabled downlink subframes usable by the network for transmission to the wireless device. The wireless device may send signaling and/or data on the enabled uplink subframes and may receive signaling and/or data on the enabled downlink subframes. The wireless device may power down during non-enabled subframes to conserve battery power. Mechanisms to a quickly transition between the DTX and DRX modes are described.

And in the application US 2008/0123548 A1, a method and a radio system of controlling radio resources are described. By utilizing the method and the radio system, a periodicity of the received uplink channel traffic is measured, and a discontinuous uplink operation is controlled on the basis of the measured periodicity of the received uplink channel traffic.

**SUMMARY OF THE INVENTION**

To solve the above technical problems, the present invention is directed to a service configuration method and device, so as to reduce transmission time delay of a service and improve the QoS of the service.

An embodiment of the present invention provides a service configuration method, where the method includes:

acquiring an uplink load of a cell which a UE belongs to; and
configuring an uplink service of the UE into a DTX mode 1 when the uplink load of the cell is higher than a first load threshold, wherein the DTX mode 1 is a mode that data is to be transmitted only strictly on a burst time slot of each cycle.

An embodiment of the present invention provides a base station, where the base station includes a load judgment unit and a first configuration unit;

the load judgment unit is configured to acquire an uplink load of a cell which a UE belongs to, and trigger a first configuration unit when the uplink load is higher than a set first load threshold; and

the first configuration unit is configured to configure an uplink service of the UE into an uplink Discontinuous Transmission, DTX, mode 1 according to the triggering of the load judgment unit, wherein the DTX mode 1 is a mode that data is to be transmitted only strictly on a burst time slot of each cycle.

In view of the above, since an uplink service of a UE is configured into a mode which is strict on discontinuously sending the pattern burst when an uplink load of a cell which the UE belongs to is higher than a set first load threshold, the UE can save more time slots to reduce the uplink load and improve the QoS of the service.

## BRIEF DESCRIPTION OF THE DRAWINGS

FIG. 1 is a flow chart of a service configuration method 1 according to an embodiment of the present invention;

FIG. 2 is a working state transition diagram of a cell according to an embodiment of the present invention;

FIG. 3 is an overall state diagram of implementation of DTX/DRX activation and deactivation according to an embodiment of the present invention;

FIG. 4 is a schematic view of a service configuration method 2 according to an embodiment of the present invention;

FIG. 5 is a flow chart of a service configuration method 3 according to an embodiment of the present invention;

FIG. 6 is a flow chart of a service configuration method 4 according to an embodiment of the present invention;

FIG. 7 is a flow chart of a service configuration method 5 according to an embodiment of the present invention;

FIG. 8 is a flow chart of a service configuration method 6 according to an embodiment of the present invention;

FIG. 9 is a flow chart of a service configuration method 7 according to an embodiment of the present invention;

FIG. 10 is a flow chart of a service configuration method 8 according to an embodiment of the present invention;

FIG. 11 is a flow chart of a service configuration method 9 according to an embodiment of the present invention;

FIG. 12 is a flow chart of a service configuration method 10 according to an embodiment of the present invention;

FIG. 13 is a schematic structural view of a NodeB Device 1 according to an embodiment of the present invention;

FIG. 14 is a schematic structural view of a NodeB Device 2 according to an embodiment of the present invention;

FIG. 15 is a schematic structural view of a NodeB Device 3 according to an embodiment of the present invention; and

FIG. 16 is a schematic structural view of a NodeB Device 4 according to an embodiment of the present invention.

## DETAILED DESCRIPTION OF THE EMBODIMENTS

The present invention provides a service configuration method and device. In order to make the objectives, technical solutions, and advantages of the present invention more comprehensible, the present invention is described in further detail below with reference to embodiments and the accompanying drawings.

For ease of understanding, some concepts that may be involved in the embodiments of the present invention are firstly introduced in the following.

A 3rd Generation Partnership Project Release 99 (3GPP R99) service, called an R99 service for short, mainly refers to a service type in which both an uplink service and a downlink service of a UE are borne over a Dedicated Channel (DCH). A 3rd Generation Partnership Project Release 6 (3GPP R6) service refers to that an uplink service of a UE is borne over High Speed Uplink Packet Access (HSUPA), and a downlink service of the UE is borne over HSDPA. A service supporting the 3GPP R7 technology is called an R7 service for short, and is a service based on an R6 service to which the CPC technology is added. Unless specially noted, services in examples in the following descriptions of the embodiments of the present invention are all 3GPP R7 services. In the CPC technology, transmission and reception modes, namely DTX/DRX mode, of a service can be configured. It should be understood that, the transmission and the reception herein are relative. For example, transmission to a NodeB is reception to a UE; and transmission to a UE is reception to a NodeB. For example, DRX refers to that a UE performs DRX, and a NodeB performs DTX; and DTX refers to that a UE performs DTX, and a NodeB performs DRX. For ease of description, no matter for DTX or DRX, the transmission mode is adopted.

DTX/DRX modes specifically include two modes: a mode which is strict on discontinuously sending the pattern burst and a mode for continuous start head transmitting on the pattern burst. The mode which is strict on discontinuously sending the pattern burst may also be called a fixed initial transmission and fixed subsequent transmission mode, which refers to that data to be transmitted can only be transmitted strictly on a burst time slot of each cycle. The mode for continuous start head transmitting on the pattern burst may also be called a fixed initial transmission and continuous subsequent transmission mode, which refers to that when no data is transmitted, and non-data transmission time exceeds a certain threshold, new data can only be transmitted on a burst time slot of a next cycle; and if data is being transmitted, the transmission can be performed continuously until the data is completely transmitted.

Services configured to the mode which is strict on discontinuously sending the pattern burst or the mode for continuous start head transmitting on the pattern burst respectively have an activation state and a deactivation state. A DTX activation state refers to that an uplink service of a UE is in a DPCCH DTX state. A DTX deactivation state refers to that an uplink service of a UE is in a DPCCH continuous transmission state. A DRX activation state refers to that a service in a downlink of a UE is in an HS-SCCH DTX state. A DRX deactivation state refers to that a service in a downlink of a UE is in an HS-SCCH continuous transmission state.

For ease of description, in the following, the mode which is strict on discontinuously sending the pattern burst is called a mode 1, and the mode for continuous start head transmitting on the pattern burst is called a mode 2. Specifically, an uplink service of a UE may be configured into a DTX mode 1 or a DTX mode 2, and a service in a downlink of a UE may be configured into a DRX mode 1 or a DRX mode 2. If services in an uplink and a downlink of a UE are configured into the mode 1 at the same time, the mode 1 may be represented by a DTX/DRX mode 1, and if services in an uplink and a downlink of a UE are configured into the mode 2 at the same time, the mode 2 may be represented by a DTX/DRX mode 2. For different modes and services in the different modes, activation states and deactivation states respectively include such forms as a DTX mode 1 activation state, a DTX mode 1 deactivation state, a DTX mode 2 activation state, a DTX mode 2 deactivation state, a DRX mode 1 activation state, a DRX mode 1 deactivation state, a DRX mode 2 activation state, and a DRX mode 2 deactivation state. When services in an uplink and a downlink of a UE are in the same mode or same state, the states may be represented by a DTX/DRX mode 1 activation state, a DTX/DRX mode 1 deactivation state, a DTX/DRX mode 2 activation state, and a DTX/DRX mode 2 deactivation state. Unless specially noted, activation states and deactivation states in the descriptions of the following embodiments are all activation states and deactivation states in the DTX/DRX mode 1.

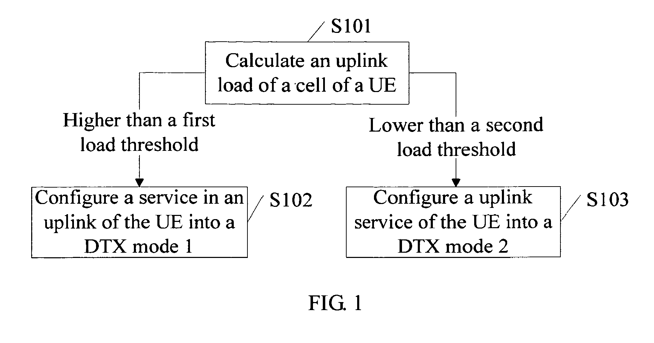

FIG. 1 is a flow chart of a service configuration method 1 according to an embodiment of the present invention, and the method includes the following steps.

In Step S101, an uplink load of a cell of a UE is calculated. When the uplink load is higher than a first load threshold, the procedure proceeds to Step S102, and when the uplink load is lower than a second load threshold, the procedure proceeds to Step S103. The second load threshold is smaller than or equal to the first load threshold.

The first load threshold and the second load threshold may be set by a user according to a specific situation of network operation.

In Step S102, an R7 service in an uplink of the UE is configured into a DTX mode 1.

In Step S103, the R7 uplink service of the UE is configured into a DTX mode 2.

In this embodiment, when the uplink load of the cell is higher than the set first load threshold, the R7 uplink service of the UE is configured into the DTX mode 1, so that service data can be transmitted strictly on a pattern burst time slot discontinuously, and the UE can save more time slots, thereby reducing the uplink load. When the configured uplink load of the cell is lower than the set second load threshold, the R7 uplink service of the UE is configured into the DTX mode 2. For the DTX mode 2, the pattern burst time slot is only aimed at during the first time of transmitting service data, and then the UE can transmit the service data continuously, thereby reducing transmission time delay of the service data in the uplink of the UE. In view of the above, in this embodiment, not only the uplink load of the cell can be reduced to some extent, but also the transmission time delay of the uplink service can be reduced to some extent, and data packet loss incurred by time delay accumulation is avoided, thereby improving the QoS of the service.

It should be understood that, when the uplink load of the cell is higher than the first load threshold, the uplink service of the UE may also be configured into the DTX mode 1 to improve the QoS of the service.

In the above embodiment, how to perform the initial configuration on the service is described, and it should be understood that, how the service is switched between the DTX mode 1 and the DTX mode 2 is described below.

Based on the above embodiment, a third load threshold may be set, and the third load threshold is smaller than or equal to the first load threshold. When the R7 uplink service of the UE is configured into the DTX mode 1, and the uplink load of the cell is lower than the set third load threshold, the uplink service of the UE is configured into the DTX mode 2, so as to further reduce the transmission time delay of the service data.

Therefore, when the uplink load of the cell is lower than the set third load threshold, the uplink service of the UE is switched from the DTX mode 1 to the DTX mode 2, thereby further reducing uplink time delay and improving the QoS of the service.

For the service configured into the DTX mode 2, a fourth load threshold may be further set. The fourth load threshold is greater than or equal to the third load threshold, and is smaller than or equal to the first load threshold. When the uplink load of the cell is higher than the set fourth load threshold, the uplink service of the UE is configured into the DTX mode 1, so as to reduce the uplink load when the service data is sufficient, thereby avoiding a call drop failure.

It should be understood that, the third load threshold and the fourth load threshold can be set according to a specific situation of the network operation.

So, by setting the third load threshold and the fourth load threshold, the uplink service of the UE can be switched between the DTX mode 1 and the DTX mode 2. Therefore, reduction of the uplink load and reduction of the transmission time delay of the uplink service can be balanced as much as possible, thereby further improving the QoS of the service.

It should be understood that, in order to further improve the QoS of the service, based on the above embodiments, a service in a downlink of the UE can also be configured at the same time. For example, when the uplink service of the UE is configured into the DTX mode 1, downlink service of the UE is configured into a DRX mode 1.

Alternatively, when the uplink service of the UE is configured into the DTX mode 2, downlink service of the UE is configured into the DRX mode 2.

During specific implementation, when the service of the UE is in the DTX mode 2 and the uplink load of the cell is higher than the set fourth load threshold, an information element can be configured as follows, that is, configured into the DTX mode 1:

MAC_Inactivity_Threshold=1;
When the service of the UE is in the DTX mode 2 and the uplink load of the cell is higher than the set fourth load threshold, the information element can be configured as follows, that is, configured into the DTX mode 1:

Inactivity_Threshold_for_UE_DRX_cycle=0.

By configuring the information element MAC_Inactivity_Threshold=1, an inactivity threshold of a Media Access Control (MAC) sublayer is set to 1, which indicates that transmission is performed strictly on a burst time slot of each cycle.

By configuring the information element Inactivity_Threshold_for_UE_DRX_cycle=0, it indicates that an inactivity threshold of a DRX cycle of the UE is set to 0, and indicates that reception is performed strictly on a burst time slot of each cycle.

When the service of the UE is in the DTX mode 1 and the uplink load of the cell is lower than the set third load threshold, the information element can be configured as follows, that is, configured into the DTX mode 2:

MAC_Inactivity_Threshold>1;

When the service of the UE is in the DRX mode 1 and the uplink load of the cell is lower than the set third load threshold, the information element can be configured as follows, that is, configured into the DRX mode 2:

Inactivity_Threshold_for_UE_DRX_cycle>0.

By configuring the information element MAC_Inactivity_Threshold>1, it indicates that the inactivity threshold of the MAC sublayer is set greater than 1, when non-data transmission time exceeds the set inactivity threshold, new data can only be transmitted on a burst time slot of a next cycle; and if data is being transmitted, the transmission can be performed continuously until the data is completely transmitted.

By configuring the information element Inactivity_Threshold_for_UE_DRX_cycle>0, it indicates that the inactivity threshold of the DRX cycle of the UE is set to a number greater than 0, and indicates that reception is performed strictly on a burst time slot of each cycle. When non-data reception time exceeds the set inactivity threshold of the DRX cycle of the UE, new data can only be received on a burst time slot of a next cycle. If data is being received, the reception can be performed continuously until the data is completely received.

So, the above two configuration methods can be used to configure the uplink services and downlink of the UE into the same mode at the same time. When the services are configured into the DRX mode 2, the transmission time delay of the services of the UE in the uplink and the downlink can be reduced at the same time, thereby further improving the QoS of the services.

If the service is configured into an R6 mode, the uplink load of the cell exceeds a set load threshold, and a cell of an R7 service has sufficient channel resources, the R6 service of the UE is re-configured into the cell of the R7 service. When the R6 service is configured as the R7 service, the method described in the above embodiments for reducing the uplink load and the transmission time delay can be implemented to improve the QoS of the service and decrease a call drop rate of the UE.

It should be understood that, in the embodiment of the present invention, for the service of the UE in the DTX mode 1, activation operation and deactivation operation can be performed on the uplink services and the downlink of the UE according to a specific situation of network operation. By performing the activation operation on the uplink services and downlink of the UE, the load in the uplink can be further decreased. By performing the deactivation operation on the uplink services and downlink of the UE, the transmission time delay of the services can be reduced.

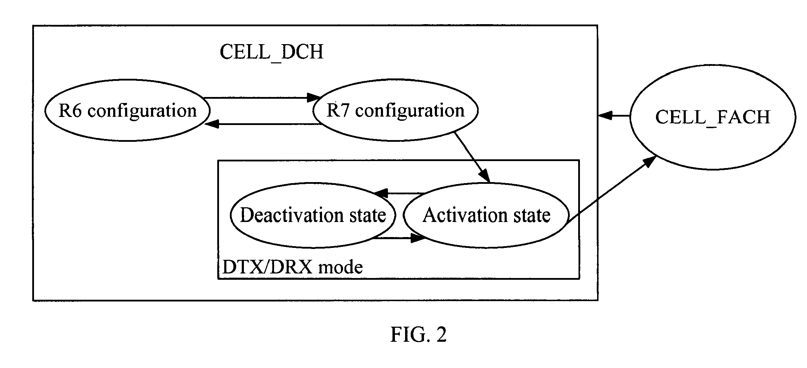

For the UE operating the services in a DTX/DRX activation state, if no service data is transmitted for a period of time exceeding a preset time threshold, and the number of the UE operating the service in the DTX/DRX activation state exceeds the number of the UE set in the DTX/DRX mode, some UEs of low priority may be selected, service channel resources corresponding to the UEs are released, and a Cell Forward Access Channel (CELL_FACH) state is entered, so that the UEs enter a more power-saving mode. For example, if UEs are divided into three grades: a high grade, a medium grade, and a low grade, all or a part of the UEs of low priority may be selected, service channel resources corresponding to the UEs are released, and a working state of the cell is switched to the CELL_FACH state. FIG. 2 is a working state transition diagram of a cell according to an embodiment of the present invention. A NodeB cell may change from one state to another when a preset condition is met. When the NodeB cell changes into the CELL_FACH state, the UE can be put in a power-saving mode. When a service of the NodeB cell is in the DTX/DRX mode, two states are presented: an activation state and a deactivation state. When the service of the NodeB cell is in the DTX/DRX mode 1, being in the activation state and the deactivation state can reduce the uplink load to varied extents. According to a specific situation of network operation, the cell may also be switched from the CELL_FACH state back to a CELL_DCH state.

When the NodeB supports coexistence of an R99 service and an R7 service, or when a UE of an R99 service is switched into an R7 cell, discontinuity intensity of the R99 service may be used as a condition for judging whether the service is to be re-configured as an R7 service. When the discontinuity intensity of the R99 service exceeds a set discontinuity intensity threshold, the R99 service may be re-configured into the cell of the R7 service, so as to prepare the service for entering the DTX/DRX mode. The discontinuity intensity refers to how much the time during which the UE transmits or receives service data discontinuously accounts for in the total transmission time.

In addition, when the uplink service of the UE is configured into the DTX mode 1, and if the uplink load is higher than a set forced activation load threshold, DTX deactivation operation can be prohibited from being performed on uplink services of all UEs in the cell, and forced DTX activation operation may be performed on several selected UEs in a DTX deactivation state, so as to reduce the uplink load of the cell.

When the uplink load of the cell is lower than a set permitted deactivation load threshold, the DTX deactivation operation is permitted to be performed on the uplink service of the UE. The maximum number of the UEs permitted to be deactivated may be set to N (N is an integer greater than or equal to 0). In each judgment cycle, the number of the UEs permitted to be deactivated at the same time is N at most, so as to reduce impact to the uplink load of the cell.

When the uplink load of the cell is within a permitted deactivation range, the DTX deactivation operation can be performed on the uplink service of the UE according to different applicable versions of the 3GPP technologies.

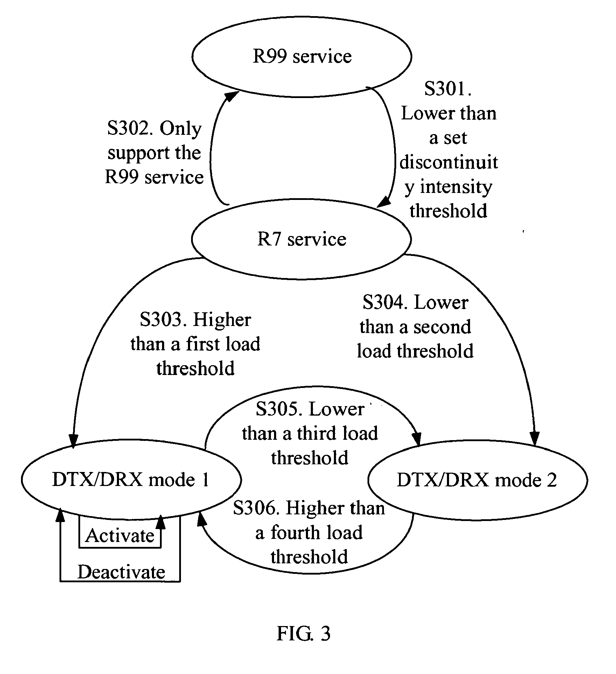

FIG. 3 is a flow chart of implementation of DTX/DRX activation and deactivation states according to an embodiment of the present invention. It should be understood that, no sequence exists between various state transitions, each step describes a transition from one state to another, and the specific steps are as follows.

In Step S301, when service discontinuity intensity of an R99 service is lower than a set discontinuity intensity threshold, the R99 service can be configured as an R7 service.

In Step S302, if a NodeB of the service can only support the R99 service, and even the service discontinuity intensity is lower than the set discontinuity intensity threshold, the original R99 service configuration is still kept.

In Step S303, for the configured R7 service, if an uplink load of a cell of a UE is higher than a set first load threshold, the R7 uplink service and downlink of the UE is configured into a DTX/DRX mode 1.

In Step S304, when the uplink load of the cell is lower than a set second load threshold, the R7 service of the UE is configured into a DTX/DRX mode 2, and the second load threshold is smaller than or equal to the first load threshold.

In Step S305, for the R7 service in the DTX/DRX mode 1, when the uplink load of the cell is lower than a set third load threshold, the R7 service of the UE is configured into the DTX/DRX mode 2.

In Step S306, for the R7 service in the DTX/DRX mode 2, when the uplink load of the cell is higher than a set fourth load threshold, the R7 service of the UE is configured into the DTX/DRX mode 1.

It should be understood that, different service types may also be allocated to the R7 service according to specific situations of network operation, and the uplink and downlink of the service can respectively be set according to the service type, so as to further improve the QoS of the service.

For example, an uplink service of a UE can be configured as a scheduled service or a non-scheduled service according to requirements. The scheduled service refers to a service that is scheduled through an Enhanced-Dedicated Channel (E-DCH) scheduled transmission grant information element by using an uplink scheduling control method. The non-scheduled service refers to a service that performs service communication by setting information of the Maximum Number of Bits per MAC-e Protocol Data Unit (PDU) for Non-scheduled Transmission and HARQ Process Allocation for 2ms Non-scheduled Transmission Grant in an E-DCH Non-scheduled Transmission Grant information element.

Downlink service of the UE may also be configured as a delay-sensitive service or a time delay insensitive service according to requirements.

The delay-sensitive service refers to a service in which scheduling priority of delay-sensitive data is absolutely higher than that of traffic sensitive data, and the time delay insensitive service mainly focuses on a traffic sensitive service.

Therefore, downlink service of the UE is configured as a downlink delay-sensitive service, so that the performance index of downlink service of the UE can meet requirements of a user, the transmission time delay of the service data in the downlink of the UE is reduced, and the QoS of the service is thereby improved.

For example, for a Voice over Internet Protocol (VoIP) service, a transmission cycle of a voice packet normally is 20 ms. Generally, only a data packet of one Transfer Time Interval (TTI) (three time slots) is transmitted in 20 ms, but totally five TTIs (2ms-configuration) are included in 20 ms, so that in the remaining four TTIs, besides re-transmitted data, no new data packet is transmitted. Therefore, for the VoIP service, a mode 1 configuration manner may be adopted, and the data packet is transmitted strictly on a pattern burst time slot, so as to reduce cases in which the NodeB and UE monitor excessive invalid time slots during non-transmission time. Specifically, the configuration can be performed through the following method.

If an uplink load of a cell of a UE is higher than the set first load threshold, a uplink service of the UE can be configured into an uplink non-scheduled service DTX mode 1, and a service in a downlink of the UE can be configured into a downlink delay-sensitive service DRX mode 1.

If the uplink load of the cell is lower than the set second load threshold, the uplink service of the UE can be configured into an uplink non-scheduled service DTX mode 2, and downlink service of the UE can be configured into a downlink delay-sensitive service DRX mode 2.

A difference between characteristics of a Hyper Text Transport Protocol (HTTP) service and those of a VoIP service is that, in the HTTP service, no data may be transmitted during a long period of time, the transmission time of data is more concentrated, and based on this characteristic, the following configuration may be performed.

If an uplink load of a cell of a UE is higher than the set first load threshold, a uplink service of the UE can be configured into an uplink scheduled service DTX mode 1, and a service in a downlink of the UE can be configured into a downlink non-delay-sensitive service DRX mode 1.

If the uplink load of the cell is lower than the set second load threshold, the uplink service of the UE can be configured into an uplink scheduled service DTX mode 2, and downlink service of the UE can be configured into a downlink non-delay-sensitive service DRX mode 2.

For a stream service, according to uplink and downlink data transmission characteristics thereof, the following configuration can be performed.

If an uplink load of a cell of a UE is higher than the set first load threshold, a uplink service of the UE can be configured into an uplink scheduled service DTX mode 1, and a service in a downlink of the UE can be configured into a downlink delay-sensitive service DRX mode 1.

If the uplink load of the cell is lower than the set second load threshold, the uplink service of the UE can be configured into an uplink scheduled service DTX mode 2, and downlink service of the UE can be configured into a downlink delay-sensitive service DRX mode 2.

Activation operation may also be performed on a service of a UE in the DTX/DRX mode 1 to further reduce the uplink load of the cell, or deactivation operation may be performed on the service of the UE in the DTX/DRX mode 1 to reduce the transmission time delay of the service data of the UE.

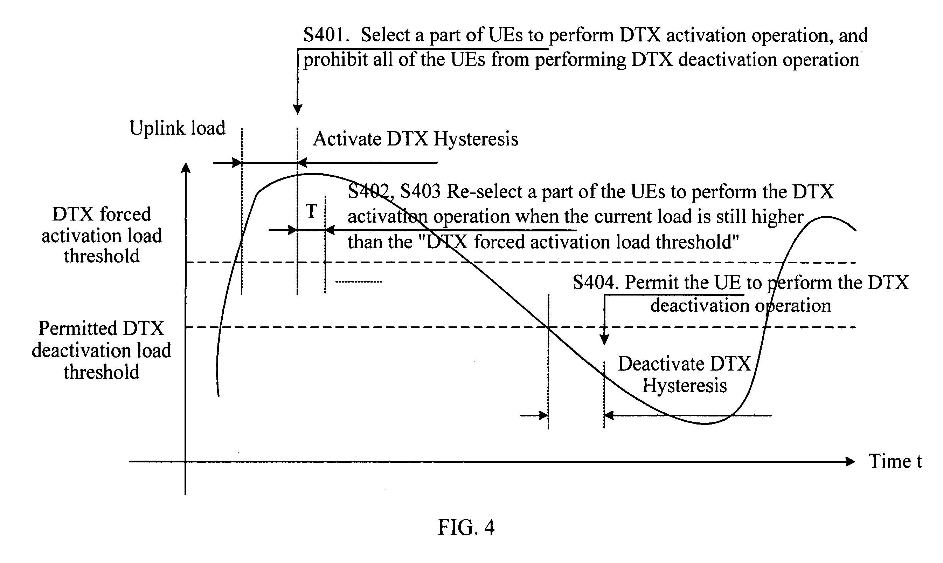

FIG. 4 is a schematic view of a service configuration method 2 based on an uplink load according to an embodiment of the present invention, the method performs configuration based on an uplink load of a cell of a UE, and the method specifically includes the following steps.

In Step S401, when an uplink load of a cell of a UE is higher than a "DTX forced activation load threshold", a NodeB selects a part of UEs that do not perform DTX activation operation, and performs the DTX activation operation on uplink servicess of the UEs in a forced manner. Meanwhile, the NodeB prohibits DTX deactivation judgment and operation from being performed on services in uplinks of all UEs in the cell by setting a permitted UE DTX deactivation number PermDeactUe-Num=0.

Based on the "DTX forced activation load threshold", an Activate DTX Hysteresis may be added. The Activate DTX Hysteresis can be flexibly set according to requirements to fine-tune the "DTX forced activation load threshold". The Activate DTX Hysteresis may be set to a positive value, a negative value, or 0. In FIG. 4, Activate DTX Hysteresis=0.

In Step S402, after a certain time length (a time T), if the current uplink load of the cell is still higher than the "DTX forced activation load threshold", a part of the UEs that do not perform the DTX activation operation are re-selected, and the DTX activation operation is performed on the uplink servicess of the UEs. In order to prevent invalid action of the NodeB, when "the number of a part of the UEs" selected by the NodeB once is not enough, the NodeB does not re-select the UEs to perform the activation operation anymore.

In Step S403, Step S402 is repeated until the current uplink load of the cell is lower than the "DTX forced activation load threshold" or no suitable UE can be selected.

In Step S404, when the uplink load of the cell is lower than a "permitted DTX deactivation load threshold", the NodeB permits deactivation DTX judgment and operation to be performed on services in uplinks of all UEs by setting a permitted deactivation UE number PermDeactUeNum=MaxPermDeactUeNum.

Based on the "permitted DTX deactivation load threshold", a Deactivate DTX Hysteresis may be added to fine-tune the "permitted DTX deactivation load threshold". The Deactivate DTX Hysteresis can be flexibly set according to requirements, and the Deactivate DTX Hysteresis may be set to a positive value, a negative value, or 0. In FIG. 4, Deactivate DTX Hysteresis=0.

It should be understood that, the sequence of the steps is only based on a schematic load curve change diagram shown in FIG. 4. But no matter what a specific curve is, if the uplink load of the cell increases continuously and exceeds a set "DTX forced activation threshold", the DTX activation may be performed on selected uplink services of the UE, and the DTX deactivation operation is prohibited from being performed on the uplink servicess of all of the UEs. When the uplink load of the cell decreases continuously and is not lower than the set "permitted DTX deactivation load threshold", the NodeB may also select a UE, perform the DTX activation operation on the uplink service of the UE, and meanwhile prohibit the DTX deactivation operation from being performed on the uplink servicess of all of the UEs. When the load of the cells is lower than the set "permitted DTX deactivation load threshold", the DTX deactivation judgment and operation are permitted to be performed on the uplink servicess of all of the UEs. When the uplink load of the cell increases continuously and is lower than a set "permitted DTX forced activation load threshold", the DTX deactivation operation is permitted to be performed on the uplink service of the UE.

When a UE has multiple services, the services may be called combined services. How to perform the activation operation and the deactivation operation when the number of the services of the UE is greater than 1 is described below in detail.

Firstly, for a newly added service, only when the newly added service and all existing services support DTX/DRX mode configuration, can the DTX/DRX mode configuration be performed, and otherwise, the DTX/DRX mode configuration is cancelled.

For the combined services, the cases in which deactivation operation is required to be performed are as follows.

When one service in an uplink of a UE meets a set DTX deactivation condition, deactivation operation is performed on all uplink services and a downlink of the UE, so that the services enter a DTX deactivation/DRX deactivation state.

When an uplink service of a UE is in a DTX activation state, and at least one of combined services in a downlink of the UE meets a set deactivation condition, DRX deactivation operation is performed on all services in the downlink of the UE, so that the services enter a DRX deactivation state.

For the combined services, the cases in which activation operation is required to be performed are as follows.

Only when all services in an uplink of a UE meet a set DTX activation condition, can each of the uplink services of the UE enter a DTX activation state. In this case, each service in a downlink is still in the DRX deactivation state, and when subsequent services meet a set DRX activation condition, corresponding services in the downlink enter the DRX activation state.

When all services in an uplink of a UE are in the DTX activation state, and all services in a downlink of the UE meet the set DRX activation condition, the DRX activation operation is permitted to be performed on downlink services of the UE, so that the services enter the DRX activation state.

The DTX deactivation operation is determined by factors such as traffic, the number of the times of re-transmission, time delay, and scheduling methods. In a load-based control method, when the load is high, DTX forced activation operation is triggered, and the number PermDeactUeNum of the UEs on which the DTX deactivation is permitted to be performed is set periodically to limit the number of the UEs on which the DTX deactivation is performed during a DTX activation/deactivation operation process based on the QoS. Descriptions are given below through specific embodiments.

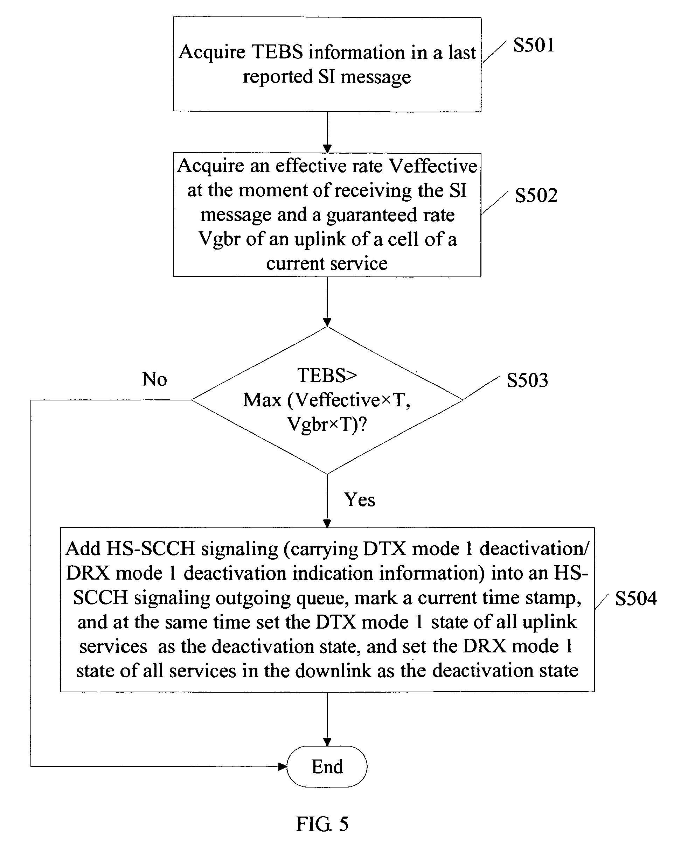

1. For uplink scheduled services such as an HTTP service: if an uplink scheduled service in an uplink of a UE is in the DTX activation state, judgment of a deactivation condition may be performed in an event-triggered manner. FIG. 5 is a flow chart of a service configuration method 3 according to an embodiment of the present invention, and the method specifically includes the following steps.

In Step S501, Total E-DCH Buffer State (TEBS) information in a last reported Service Indication (SI) message is acquired.

In Step S502, an effective rate Veffective at the moment of receiving the SI message and a guaranteed rate Vgbr of an uplink of a cell of a current service are acquired.

In Step S503, whether TEBS>max(Veffective ×T, Vgbr×T) is judged, in which T represents a judgment cycle. If yes, the procedure proceeds to Step S504; otherwise, the procedure ends.

In Step S504, HS-SCCH signaling is added into an HS-SCCH signaling outgoing queue, the signaling carries DTX mode 1 deactivation/DRX mode 1 deactivation indication information, and a current time stamp is marked (after the HS-SCCH signaling is successfully transmitted, the DTX mode 1 state of all uplink services of the UE is set as the deactivation state, and the DRX mode 1 state of all services in the downlink of the UE is set as the deactivation state).

The HS-SCCH signaling carrying the DTX mode 1 deactivation/DRX mode 1 deactivation indication information is added into the HS-SCCH signaling outgoing queue, and the current time stamp is marked, so that the signaling can be transmitted to the UE within a certain period of time; therefore, the UE configures all of the uplink services into the DTX mode 1 deactivation state, and configures all of downlink services into the DRX mode 1 deactivation state.

In the following, a DTX mode 1 activation operation process of an uplink scheduled service is illustrated. An uplink scheduled uplink service of the UE is in the DTX mode 1 deactivation state, activation condition judgment can be performed on the service in a periodical judgment manner.

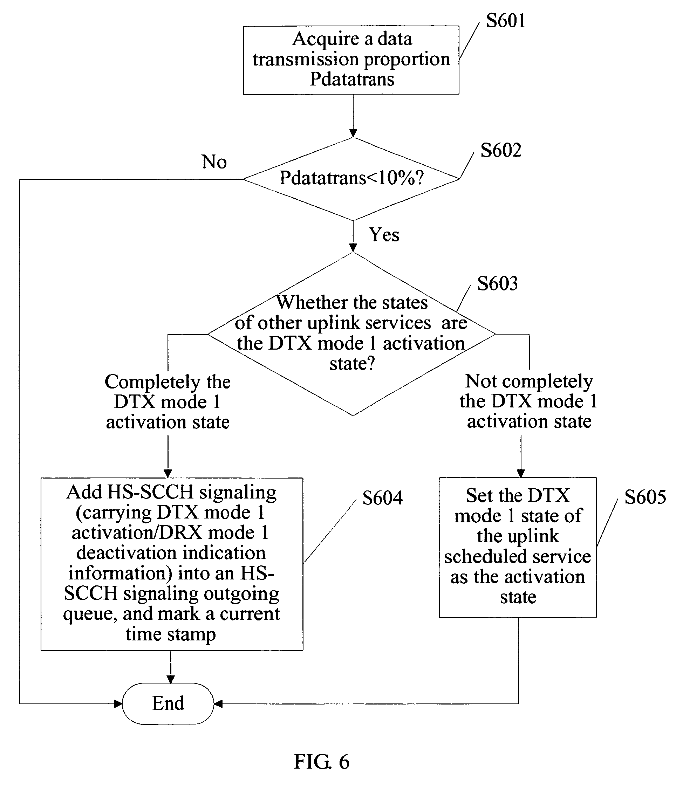

FIG. 6 is a flow chart of a service configuration method 4 according to an embodiment of the present invention, and the method specifically includes the following steps.

In Step S601, a data transmission proportion Pdatatrans is acquired.

For example, a proportion of the data that is scheduled and transmitted during 100 TTIs may be calculated to acquire the data transmission proportion Pdatatrans. That is:

$$Pdatatrans = NumTTI_{datatrans}/100 .$$

In Step S602, when a cycle arrives, whether Pdatatrans<10% is judged. If yes, the procedure proceeds to Step S603; otherwise, the procedure ends.

It should be understood that, the value 10% is set by a user, and other values may also be set by the user according to requirements.

In Step S603, it is judged whether the states of other uplink services of the UE are the DTX mode 1 activation state. If the DTX mode 1 states of all other uplink services of the UE are the DTX mode 1 activation state, the procedure proceeds to Step S604; and if not all of the DTX mode 1 states of the other uplink services of the UE are the DTX mode 1 activation state, the procedure proceeds to Step S605.

In Step S604, HS-SCCH signaling is added into an HS-SCCH signaling outgoing queue. The signaling carries DTX mode 1 activation/DRX mode 1 deactivation indication information, and a current time stamp is marked (after the HS-SCCH signaling is successfully transmitted, the DRX mode 1 state of all services in the downlink of the UE is set as the deactivation state).

According to the DTX mode 1 activation/DRX mode 1 deactivation indication information carried in the HS-SCCH signaling, the UE may set all uplink services of the UE into the DTX mode 1 activation state, and set all services in the downlink of the UE into the DRX mode 1 deactivation state.

In Step S605, the DTX mode 1 state of the uplink scheduled service is set as the activation state.

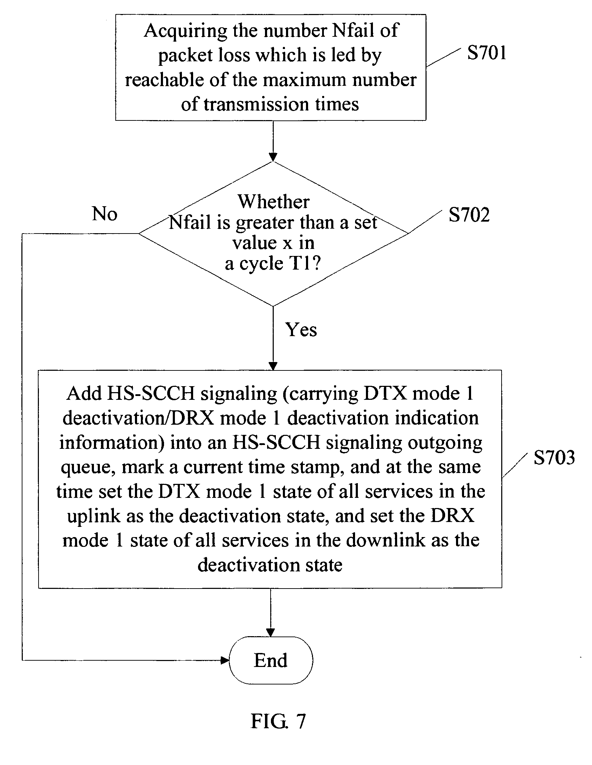

2. For uplink non-scheduled services such as a VoIP service: if an uplink non-scheduled service in an uplink of a UE is in the DTX activation state, judgment of a deactivation condition may be performed in an event-triggered manner, and the judgment is performed for each packet loss. FIG. 7 is a flow chart of a service configuration method 5 according to an embodiment of the present invention, and the method specifically includes the following steps.

In Step S701, the number Nfail of packet loss which is caused by reaching the maximum number of transmission times is acquired.

In Step S702, it is judged whether Nfail is greater than a set value x in a judgment cycle T1. If yes, the procedure proceeds to Step S703; otherwise, the procedure ends.

For example, if the set cycle T1 is 5s, and the set value x is 5, it is judged whether Nfail>5.

In Step S703, HS-SCCH signaling is added into an HS-SCCH signaling outgoing queue, the signaling carries DTX mode 1 deactivation/DRX mode 1 deactivation indication information, and a current time stamp is marked (after the HS-SCCH signaling is successfully transmitted, the DTX mode 1 state of all uplink services of the UE is set as the deactivation state, and the DRX mode 1 state of all services in the downlink of the UE is set as the deactivation state).

According to the DTX mode 1 activation/DRX mode 1 deactivation indication information carried in the HS-SCCH signaling, the UE may set all uplink services of the UE into the DTX mode 1 activation state, and set all services in the downlink of the UE into the DRX mode 1 deactivation state.

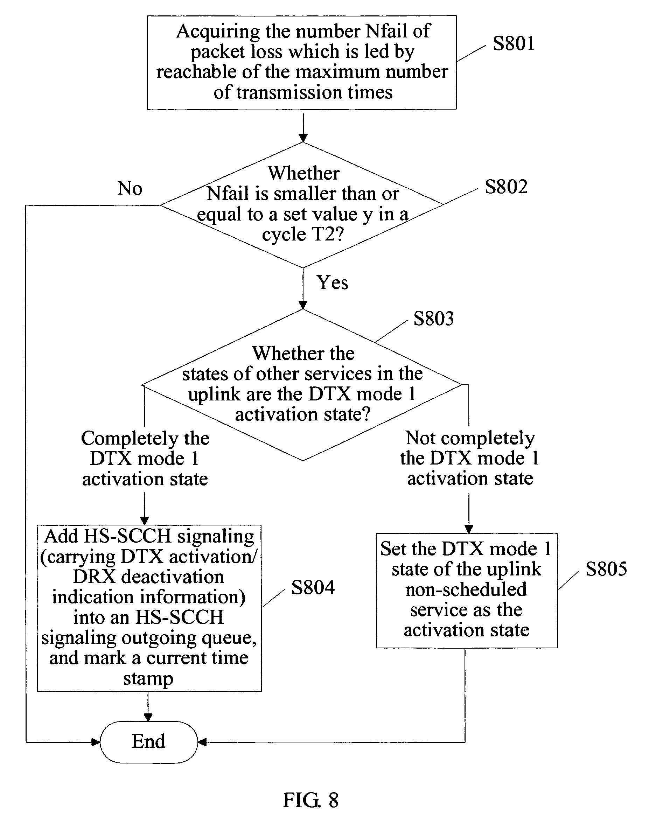

In the following, a DTX activation operation process of an uplink non-scheduled service is illustrated. An uplink non-scheduled uplink service of the UE is in the DTX deactivation state, and activation condition judgment can be performed in a periodical judgment manner. FIG. 8 is a flow chart of a service configuration method 6 according to an embodiment of the present invention, and the method specifically includes the following steps.

In Step S801, the number Nfail of packet loss which is caused by reaching the maximum number of transmission times is acquired.

In Step S802, it is judged whether Nfail is smaller than or equal to a set value y in a judgment cycle T2. If yes, the procedure proceeds to Step S803; otherwise, the procedure ends.

For example, if the set cycle T2 is 5s, and the set value y is 1, it is judged whether Nfail≤1.

In Step S803, it is judged whether the DTX mode 1 states of other uplink services of the UE are the DTX mode 1 activation state. If all of the other uplink services of the UE are in the DTX mode 1 activation state, the procedure proceeds to Step S804; and if not all of the other uplink services of the UE are the DTX mode 1 activation state, the procedure proceeds to Step S805.

In Step S804, HS-SCCH signaling is added into an HS-SCCH signaling outgoing queue, the signaling carries DTX mode 1 activation/DRX mode 1 deactivation indication information, and a current time stamp is marked.

Alternatively, after Step S804, the method may further include: setting DRX mode 1 states of all services in the downlink of the UE into the deactivation state after the HS-SCCH signaling is successfully transmitted.

According to the DTX mode 1 activation/DRX mode 1 deactivation indication information carried in the HS-SCCH signaling, all uplink services of the UE are set into the DTX mode 1 activation state, and all services in the downlink of the UE are set into the DRX mode 1 deactivation state.

In Step S805, the DTX mode 1 state of the uplink non-scheduled service is set as the activation state.

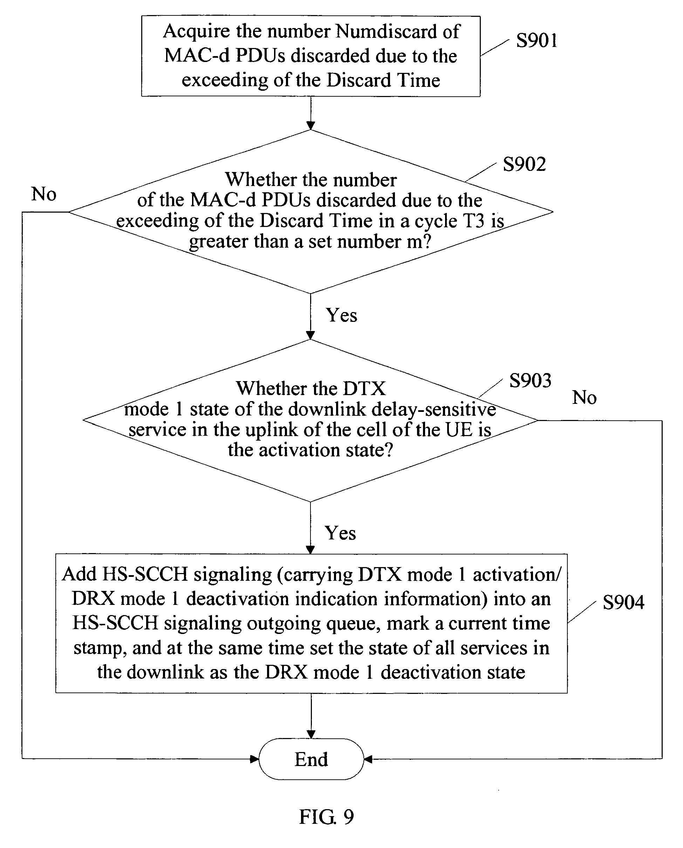

3. For downlink delay-sensitive services such as a VoIP service and a stream service: if a downlink delay-sensitive service in a downlink of a UE is in the DRX activation state, judgment of a deactivation condition may be performed in an event-triggered manner, and the judgment is performed whenever a Discard Time exceeds a preset overtime packet loss time. FIG. 9 is a flow chart of a service configuration method 7 according to an embodiment of the present invention, and the method specifically includes the following steps.

In Step S901, the number Numdiscard of Media Access Control-Dedicated (MAC-d) PDUs discarded due to the exceeding of the Discard Time is acquired.

In Step S902, it is judged whether the number of the MAC-d PDUs discarded due to the exceeding of the Discard Time in a cycle T3 is greater than a set number m. If yes, the procedure proceeds to Step S903;

otherwise, the procedure ends.

For example, T3 may be set to 5s, and m may be set to 5.

In Step S903, it is judged whether the DTX mode 1 state of the downlink delay-sensitive service in the uplink of the UE is the activation state. If yes, the procedure proceeds to Step S904; otherwise, the procedure ends.

In Step S904, HS-SCCH signaling is added into an HS-SCCH signaling outgoing queue, the signaling carries DTX mode 1 activation/DRX mode 1 deactivation indication information, and a current time stamp is marked.

Alternatively, after Step S904, the method may further include: setting DRX mode 1 states of all services in the downlink of the UE into the deactivation state after the HS-SCCH signaling is successfully transmitted.

According to the DTX mode 1 activation/DRX mode 1 deactivation indication information carried in the HS-SCCH signaling, the UE sets all services of the UE into the DTX mode 1 activation state/DRX mode 1 deactivation state.

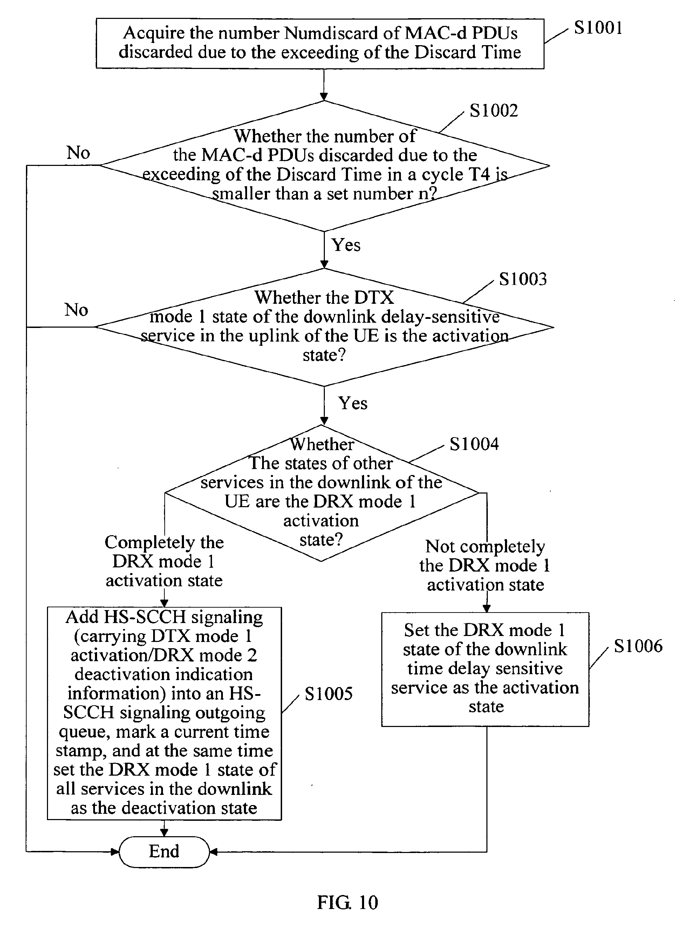

In the following, a DRX activation operation process of a downlink delay-sensitive service is illustrated. A downlink delay-sensitive service in the downlink of the UE is in the DRX deactivation state, activation condition judgment can be performed in a periodical judgment manner. FIG. 10 is a flow chart of a service configuration method 8 according to an embodiment of the present invention, and the method specifically includes the following steps.

In Step S1001, the number Numdiscard of MAC-d PDUs discarded due to the exceeding of the Discard Time is acquired.

In Step S1002, it is judged whether the number of the MAC-d PDUs discarded due to the exceeding of the Discard Time in a cycle T4 is smaller than a set number n. If yes, the procedure proceeds to Step S1003; otherwise, the procedure ends.

For example, T4 may be set to 5s, and n may be set to 1.

In Step S1003, it is judged whether the DTX mode 1 state of the downlink delay-sensitive service in the uplink of the UE is the activation state. If yes, the procedure proceeds to Step S1004; otherwise, the procedure ends.

In Step S1004, it is judged whether all DRX mode 1 states of other services in the downlink of the UE are the DRX mode 1 activation state. If all the DRX mode 1 states of the other services in the downlink of the UE are the DRX mode 1 activation state, the procedure proceeds to Step S1005. If not all the DRX mode 1 states of the other services in the downlink of the UE are the DRX activation state, the procedure proceeds to Step S1006.

In Step S1005, HS-SCCH signaling is added into an HS-SCCH signaling outgoing queue, the signaling carries DTX mode 1 activation/DRX mode 1 activation indication information, and a current time stamp is marked.

According to the DTX activation/DRX activation indication information carried in the HS-SCCH signaling, the UE may set all uplink services of the UE into the DTX mode 1 activation state, and set all services in the downlink of the UE into the DRX mode 1 activation state.

In Step S1006, the DRX mode 1 state of the downlink delay-sensitive service is set as the DRX mode 1 activation state.

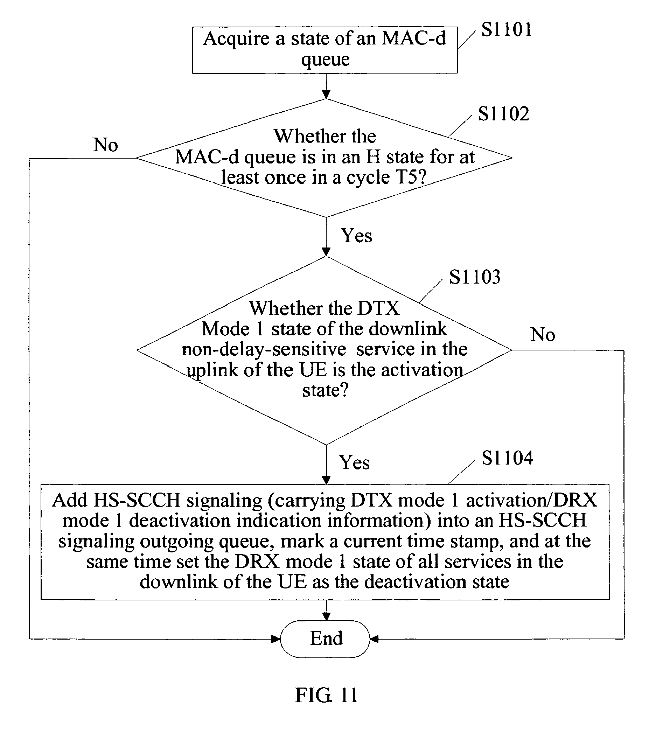

4. For downlink non-delay-sensitive services such as an HTTP service: if a downlink non-delay-sensitive service in a downlink of a UE is in the DRX activation state, judgment of a deactivation condition may be performed in an event-triggered manner. FIG. 11 is a flow chart of a service configuration method 9 according to an embodiment of the present invention, and the method specifically includes the following steps.

In Step S1101, a state of an MAC-d queue is acquired.

Different states of the MAC-d queue may be set according to the length of the MAC-d queue. For example, when the length of the MAC-d queue is greater than a set value L1 and is smaller than or equal to a maximum value, the state is called an H state; when the length of the MAC-d queue is greater than a set value L2 and is smaller than L1, the state is called an M state; when the length of the MAC-d queue is greater than a set value L3 and is smaller than L2, the state is called an L state; and when the length of the MAC-d queue is greater than or equal to 0 and is smaller than L3, the state is called a bottom-touched state. It should be understood that, the division method is not limited herein.

In Step S1102, it is judged whether the MAC-d queue is in the H state for at least once in a cycle T5. If yes, the procedure proceeds to Step S1103; otherwise, the procedure ends.

When the MAC-d queue is in the H state, the length of the MAC-d queue is greater than the set maximum threshold value L1, and is smaller than or equal to the maximum value.

For example, T5 may be set to 5s.

In Step S1103, it is judged whether the DTX state of the downlink non-delay-sensitive service in the uplink of the UE is the activation state. If yes, the procedure proceeds to Step S1104; otherwise, the procedure ends.

In Step S1104, HS-SCCH signaling is added into an HS-SCCH signaling outgoing queue. The signaling carries DTX mode 1 activation/DRX mode 1 deactivation indication information, and a current time stamp is marked (after the HS-SCCH signaling is successfully transmitted, the DRX mode 1 state of all services in the downlink of the UE is set as the deactivation state).

Since the HS-SCCH signaling carries the DTX mode 1 activation/DRX mode 1 deactivation indication information, the UE may set all services of the UE into the DTX mode 1 activation state/DRX mode 1 deactivation state according to the indication information.

The DRX mode 1 states of all of downlink services of the UE are set as the deactivation state, so that transmission time delay of downlink services can be reduced.

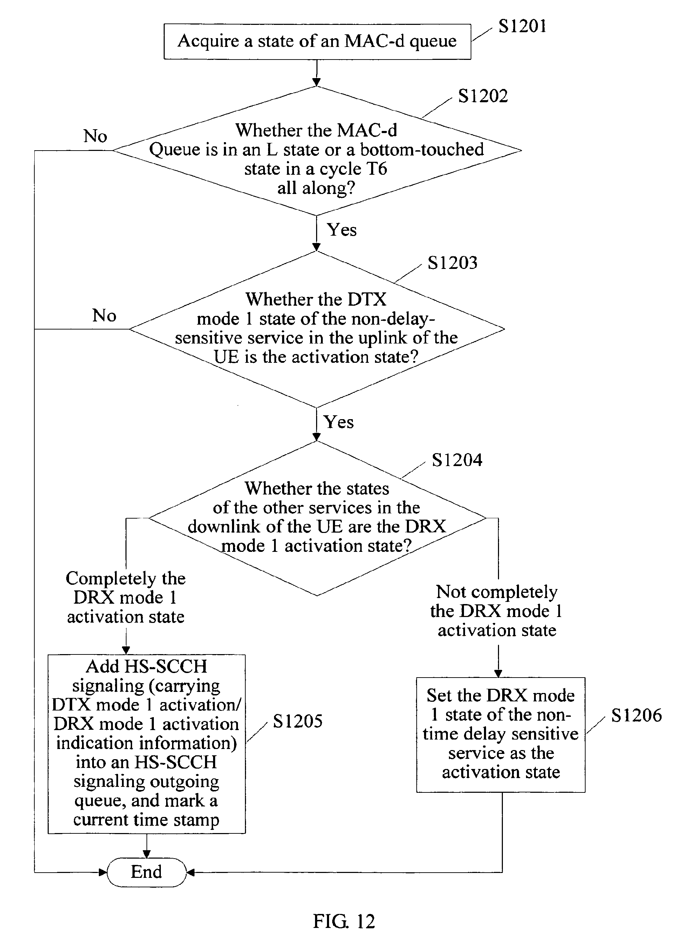

In the following, a DRX activation operation process of a downlink non-delay-sensitive service is illustrated. A non-delay-sensitive service in the downlink of the UE is in the DRX deactivation state, activation condition judgment can be performed in a periodical judgment manner. FIG. 12 is a flow chart of a service configuration method 10 according to an embodiment of the present invention, and the method specifically includes the following steps.

In Step S1201, a state of an MAC-d queue is acquired.

Different states of the MAC-d queue may be set according to the length of the MAC-d queue. For example, when the length of the MAC-d queue is greater than a set value L1 and is smaller than or equal to a maximum value, the state is called an H state; when the length of the MAC-d queue is greater than a set value L2 and is smaller than L1, the state is called an M state; when the length of the MAC-d queue is greater than a set value L3 and is smaller than L2, the state is called an L state; and when the length of the MAC-d queue is greater than or equal to 0 and is smaller than L3, the state is called a bottom-touched state. It should be understood that, the division method is not the only division method.

In Step S1202, it is judged whether the MAC-d queue is in the L state or the bottom-touched state in a cycle T6 all along. If yes, the procedure proceeds to Step S1203; otherwise, the procedure ends.

When the MAC-d queue is in the L state or the bottom-touched state, the length of the MAC-d queue is smaller than or equal to the set threshold second smallest value L2.

T6 can be set according to requirements. For example, T6 may be set to 5s according to a specific situation of network operation.

In Step S1203, it is judged whether the DTX mode 1 state of the non-delay-sensitive service in the uplink of the UE is the activation state. If yes, the procedure proceeds to Step S1204; otherwise, the procedure ends.

In Step S1204, the DRX states of other services in the downlink of the UE are judged. If all the DRX mode 1 states of the other services in the downlink of the UE are the activation state, the procedure proceeds to Step S1205. If not all the DRX mode 1 states of the other services in the downlink of the UE are the activation state, the procedure proceeds to Step S1206.

In Step S1205, HS-SCCH signaling is added into an HS-SCCH signaling outgoing queue, the signaling carries DTX mode 1 activation/DRX mode 1 activation indication information, and a current time stamp is marked.

According to the DTX mode 1 activation/DRX mode 1 activation indication information, the UE may set all uplink services of the UE into the DTX mode 1 activation state, and set all services in the downlink of the UE into the DRX mode 1 activation state.

In Step S1206, the DRX state of the non-delay-sensitive service is set as the DRX activation state.

The above description is performed by taking applications in the R7 version for example, and it should be understood that, the above service configuration methods are also applicable to versions higher than R7, which are not repeated herein.

A base station corresponding to the service configuration method according to the embodiment of the present invention is described below.

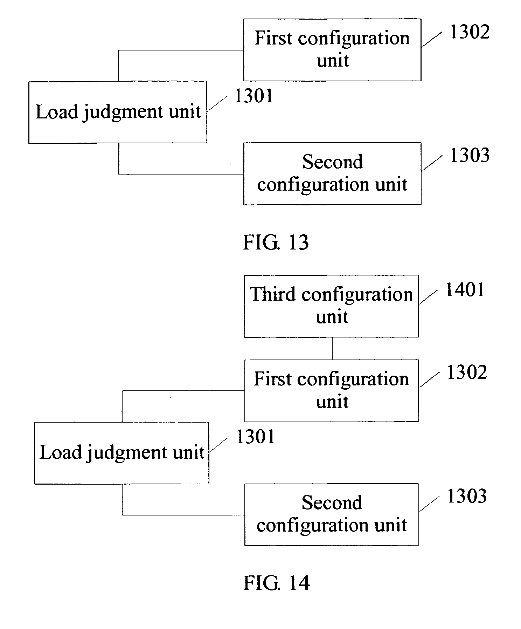

FIG. 13 is a schematic structural view of a NodeB Device 1 according to an embodiment of the present invention.

The NodeB includes: a load judgment unit 1301, a first configuration unit 1302, and a second configuration unit 1303.

The load judgment unit 1301 is configured to acquire an uplink load of a cell of a UE, trigger the first configuration unit 1302 when the uplink load is higher than a set first load threshold, and trigger the second configuration unit 1303 when the uplink load is lower than a set second load threshold. The second load threshold is smaller than or equal to the first load threshold.

The first configuration unit 1302 is configured to configure an uplink service of the UE into a DTX mode 1 according to the triggering of the load judgment unit 1301, that is, a mode which is strict on discontinuously sending the pattern burst.

The second configuration unit 1303 is configured to configure the uplink service of the UE into a DTX mode 2 according to the triggering of the load judgment unit 1301, that is, a mode for continuous DTX start head transmitting on the pattern burst.

The service is a service of 3GPP R7 or above.

So, when the uplink load of the cell is higher than the set first load threshold, the base station configures the service into the DTX mode 1, so that service data can be transmitted strictly on a burst time slot, and the UE can save more time slots, thereby reducing the uplink load. When the uplink load of the cell is lower than the set second load threshold, the base station configures the uplink service of the UE into the DTX mode 2. For the DTX mode 2, since the burst time slot is only aimed at during the first time of transmitting the service data, and the service data can be transmitted continuously after the burst time slot, transmission time delay of the service data in the uplink of the UE can be reduced. In view of the above, in this embodiment, not only the uplink load of the cell can be reduced to some extent, but also the transmission time delay in the uplink can be reduced to some extent, and data packet loss incurred by time delay accumulation is avoided, thereby improving the QoS of the service.

It should be understood that, in the base station, the load judgment unit 1301 may also calculate the uplink load of the cell, and trigger the first configuration unit 1302 when the uplink load is higher than the set first load threshold; and the first configuration unit 1302 configures the uplink service of the UE into the DTX mode 1 according to the triggering of the load judgment unit 1301, thereby reducing the uplink load and improving the QoS of the service.

The base station may also be optimized, which is illustrated below through specific embodiments.

FIG. 14 is a schematic structural view of a NodeB Device 2 according to an embodiment of the present invention. Based on the above embodiment, the NodeB Device 2 further includes a third configuration unit 1401. The third configuration unit 1401 is configured to configure the uplink service of the UE into a DTX mode 2 when the uplink service of the UE is configured into the DTX mode 1 and the uplink load of the cell is lower than a set third load threshold. The third load threshold is smaller than or equal to the first load threshold.

Therefore, when the uplink load of the cell is lower than the set third load threshold, the base station may switch the uplink service of the UE from the DTX mode 1 to the DTX mode 2, thereby further reducing uplink time delay and improving the QoS of the service.

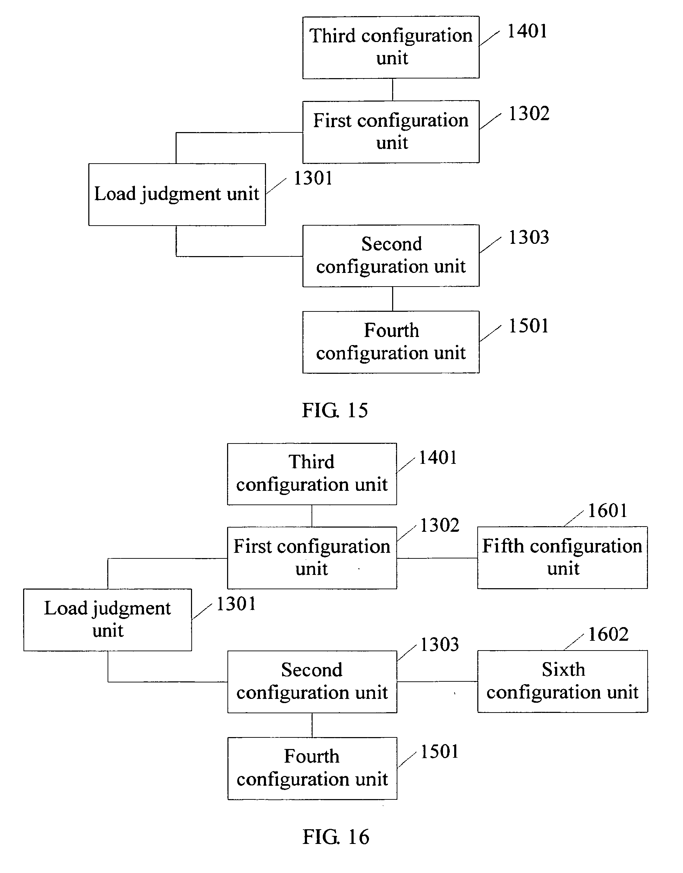

FIG. 15 is a schematic structural view of a NodeB Device 3 according to an embodiment of the present invention. Based on the base station 2, the NodeB Device 3 further includes a fourth configuration unit 1501. The fourth configuration unit 1501 is configured to configure the service into the DTX mode 1 when the service is configured into the DTX mode 2 and the uplink load of the cell is higher than a set fourth load threshold. The fourth load threshold is greater than or equal to the third load threshold, and is smaller than or equal to the first load threshold.

So, by setting the third load threshold and the fourth load threshold, the service of the UE can be switched between the DTX/DRX mode 1 and the DTX/DRX mode 2, so as to balance the reduction of the uplink load and the reduction of the time delay as much as possible, thereby further improving the QoS of the service.

It should be understood that, in the above embodiments, when the uplink service of the UE is configured, a service in a downlink of the UE may also be configured at the same time. FIG. 16 is a schematic structural view of a NodeB Device 4 according to an embodiment of the present invention. Based on the base station 1, the NodeB Device 4 may further include a fifth configuration unit 1601 and a sixth configuration unit 1602.

The fifth configuration unit 1601 is configured to configure a service in a downlink of the UE into a DL DRX mode 1, that is, a mode which is strict on discontinuously sending the pattern burst, when the uplink service of the UE is configured into the DTX mode 1.

The sixth configuration unit 1602 is configured to configure downlink service of the UE into a DRX mode 2, that is, a mode for continuous DRX start head transmitting on the pattern burst, when the uplink service of the UE is configured into the DTX mode 2.

When the uplink services and downlink of the cell are all in the mode 1, the NodeB may further perform activation operation on the uplink service of the UE to reduce the uplink load, or perform deactivation operation on the uplink services and downlink of the UE to reduce the time delay, so as to balance the reduction of the uplink load and the reduction of the time delay as much as possible, thereby further improving the QoS of the service. For example, the base station according to the above embodiments may further include a first activation operation unit.

The first activation operation unit is configured to prohibit DTX mode 1 deactivation operation from being performed on all uplink services of the UE in the cell when the uplink service of the UE is configured into the DTX mode 1 and the uplink load of the cell is higher than a set forced activation load threshold, and perform forced DTX mode 1 activation operation on some selected uplink services of the UE and in a DTX mode 1 deactivation state.

The base station may include a first deactivation judgment unit. The first deactivation judgment unit is configured to permit the DTX mode 1 deactivation operation to be performed on the uplink service of the UE when the uplink service of the UE is configured into the DTX mode 1 and the uplink load of the cell is lower than a set permitted deactivation load threshold.

The base station may further configure service types of the services according to requirements. For example, based on the above embodiments, the base station may further include a first service type configuration unit and/or a second service type configuration unit.

The first service type configuration unit is configured to configure the uplink service of the UE as an uplink scheduled service or an uplink non-scheduled service according to requirements.

The second service type configuration unit is configured to configure downlink service of the UE as a downlink delay-sensitive service or a downlink non-delay-sensitive service according to requirements.

When the service is configured in the mode 1, mode 1 activation operation and mode 1 deactivation operation may be further performed on the uplink services and downlink of the UE according to the service types. For example, the base station may include a second activation operation unit and a second deactivation operation unit.

The second activation operation unit is configured to perform the mode 1 activation operation on the service of the UE according to the service type configured by the first service type configuration unit and/or the second service type configuration unit when the uplink service of the UE is configured into the DTX mode 1 and the uplink load of the cell is within a permitted activation range.

The second deactivation operation unit is configured to perform the mode 1 deactivation operation on the service of the UE according to the service type configured by the first service type configuration unit and/or the second service type configuration unit when the uplink service of the UE is configured into the DTX mode 1 and the uplink load of the cell is within a permitted deactivation range.

The base station may further include a transmission unit. The transmission unit is configured to transmit HS-SCCH signaling to the UE within a set time period. The signaling carries deactivation operation indication information acquired from the second deactivation operation unit.

The deactivation operation indication information is specifically DTX mode 1 deactivation/DRX mode 1 deactivation indication information or DRX deactivation indication information.

In order to transmit the HS-SCCH signaling as soon as possible, scheduling priority of the HS-SCCH signaling may be set higher than scheduling priority of the service.

In order to make the services in a CELL_DCH state as many as possible to reduce the time delay and to decrease a call drop rate of the UE, based on the above embodiments, the following expansion may be further made.

For example, the base station may further include a seventh configuration unit. The seventh configuration unit is configured to re-configure a 3GPP R6 service configured in the UE into the cell of the service of the 3GPP R7 or above when the uplink load of the cell exceeds a set load threshold and when the cell of the service of the 3GPP R7 or above has enough channel resources.

The base station including the seventh configuration unit can re-configure the 3GPP R6 service configured in the UE into the cell of the service of the 3GPP R7 or above when the uplink load of the cell exceeds the set load threshold and the cell of the service of the 3GPP R7 or above has enough channel resources, so that DTX/DRX mode configuration can be performed, and the activation operation and the deactivation operation can be performed in the DTX mode 1, thereby reducing the time delay, decreasing the call drop rate of the UE, and improving the QoS of the service.

The base station may further include an eighth configuration unit. The eighth configuration unit is configured to re-configure a 3GPP R99 service into the cell of the service of the 3GPP R7 or above when discontinuity intensity of the 3GPP R99 service configured in the UE exceeds a set discontinuity intensity threshold.

The base station including the eighth configuration unit can re-configure the 3GPP R99 service into the cell of the service of the 3GPP R7 or above when the discontinuity intensity of the 3GPP R99 service configured in the UE exceeds the set discontinuity intensity threshold, so that the DTX/DRX mode configuration can be performed, and the activation operation and the deactivation operation can be performed in the DTX/DRX mode 1, thereby reducing the time delay, decreasing the call drop rate of the UE, and improving the QoS of the service.

Persons of ordinary skill in the art should understand that all or a part of the steps of the method according to the embodiments of the present invention may be implemented by a program instructing relevant hardware. The program may be stored in a computer readable storage medium. The storage medium may be a ROM, a RAM, a magnetic disk, or an optical disk.

## Claims

1. A service configuration method performed by a base station **characterized by** comprising:

   acquiring (S101) an uplink load of a cell which a User Equipment,UE, belongs to; and
   configuring (S102) an uplink service of the UE into a Discontinuous Transmission, DTX, mode 1 when the uplink load of the cell is higher than a first load threshold, wherein the DTX mode 1 is a mode that data is to be transmitted only strictly on a burst time slot of each cycle.

2. The service configuration method according to claim 1, further comprising:

   Configuring (S103) the uplink service of the UE into a DTX mode 2 when the uplink load of the cell is lower than a preset second load threshold, wherein the DTX mode 2 is a modethat when no data is transmitted, and non-data transmission time exceeds a certain threshold, new data is to be transmitted on a burst time slot of a next cycle; and if data is being transmitted, the transmission is performed continuously until the data is completely transmitted,and the second load threshold is smaller than or equal to the first load threshold.

3. The service configuration method according to claim 1, wherein when the uplink service of the UE is configured into the DTX mode 1 the method further comprises:

   configuring (S305) the uplink service of the UE into a DTX mode 2 when the uplink load of the cell is lower than a third load threshold, wherein the third load threshold is smaller than or equal to the first load threshold and the DTX mode 2 is a mode that when no data is transmitted, and non-data transmission time exceeds a certain threshold, new data is to be transmitted on a burst time slot of a next cycle; and if data is being transmitted, the transmission is performed continuously until the data is completely transmitted.

**4.** The service configuration method according to claim 3, wherein when the uplink service of the UE is configured into the DTX mode 2, the method further comprises:

configuring (S306) the uplink service of the UE into the DTX mode 1 when the uplink load of the cell is higher than a fourth load threshold, wherein the fourth load threshold is greater than or equal to the third load threshold, and is smaller than or equal to the first load threshold.

**5.** The service configuration method according to any one of claims 2 to 4, further comprising:

configuring a service type of the uplink service of the UE as an uplink scheduled service or an uplink non-scheduled service according to a comparing result between the the uplink load of the cell and a load threshold; and/or configuring a service type of downlink service of the UE as a downlink delay-sensitive service or a downlink non-delay-sensitive service according to a comparing result between the the uplink load of the cell and a load threshold.

**6.** The service configuration method according to claim 5, wherein when the uplink service of the UE is configured into the DTX mode 1, the method further comprises:

performing the DTX mode 1 deactivation operation according to the configured service type of the uplink service of the UE when the uplink load of the cell is in a permitted deactivation range; and/or performing the DTX mode 1 activation operation according to the configured service type of the uplink service of the UE when the uplink load of the cell is in a permitted activation range.

**7.** The service configuration method according to claim 6, wherein the performing the DTX mode 1 deactivation operation according to the configured service type of the uplink service of the UE when the uplink load of the cell is in the permitted deactivation range comprises:

configuring (S504) all uplink services of the UE into DTX mode 1 deactivation states when at least one uplink service of the UE meets a preset DTX mode 1 deactivation condition.

**8.** The service configuration method according to claim 7, wherein when the uplink service of the UE is configured as the uplink scheduled service, the preset DTX mode 1 deactivation condition is: TEBS > max (Veffective×T, Vgbr×T), wherein TEBS is total Enhanced-Dedicated Channel, E-DCH, buffer state information, Veffective is an effective rate at the moment of receiving a message containing the TEBS, Vgbr is a guaranteed rate of the uplink of the cell, and T represents a judgment cycle.

**9.** The service configuration method according to claim 7, wherein when the uplink service of the UE is configured as the uplink non-scheduled service, the preset DTX mode 1 deactivation condition is: the number of packet loss acquired in a first cycle is greater than a set value, wherein the packet loss is caused by reaching the maximum number of transmission times.

**10.** A base station, **characterized by** comprising a load judgment unit and a first configuration unit; wherein the load judgment unit (1301) is configured to acquire an uplink load of a cell which a User Equipment ,UE, belongs to, and trigger a first configuration unit when the uplink load is higher than a set first load threshold; and the first configuration unit (1302) is configured to configure an uplink service of the UE into an uplink Discontinuous Transmission, DTX, mode 1 according to the triggering of the load judgment unit, wherein the DTX mode 1 is a mode that data is to be transmitted only strictly on a burst time slot of each cycle.

**11.** The base station according to claim 10, further comprising a second configuration unit, wherein the load judgment unit (1301) is further configured to trigger the second configuration unit when the uplink load is lower than a set second load threshold, wherein the second load threshold is smaller than or equal to the first load threshold; and the second configuration unit (1303) is configured to configure the uplink service of the UE into a DTX mode 2 according to the triggering of the load judgment unit, wherein the DTX mode 2 is a mode that when no data is transmitted, and non-data transmission time exceeds a certain threshold, new data is to be transmitted on a burst time slot of a next cycle; and if data is being transmitted, the transmission is performed continuously until the data is completely transmitted.

**12.** The base station according to claim 10, further comprising a third configuration unit (1401), configured to configure the uplink service of the UE into a DTX mode 2 when the first configuration unit configures the uplink service of the UE into the DTX mode 1 and the uplink load of the cell is lower than a set third load threshold, wherein the third load threshold is smaller than or equal to the first load threshold and the DTX mode 2 is a mode that when no data is transmitted, and non-data transmission time exceeds a certain threshold, new data is to be transmitted on a burst time slot of a next cycle; and if data is being transmitted, the transmission is performed continuously until the data is completely transmitted.

13. The base station according to claim 11, further comprising a fourth configuration unit (1501), configured to configure the UE into the DTX mode 1 when the second configuration unit (1303) configures the uplink service of the UE into the DTX mode 2 and the uplink load of the cell is higher than a set fourth load threshold, wherein the fourth load threshold is greater than or equal to the third load threshold, and is smaller than or equal to the first load threshold.

14. The base station according to any one of claims 11 to 13, further comprising:

> a first service type configuration unit, configured to configure the uplink service of the UE as an uplink scheduled service or an uplink non-scheduled service according to a comparing result between the the uplink load of the cell and a load threshold; and/or
> a second service type configuration unit, configured to configure a downlink service of the UE as a downlink delay-sensitive service or a downlink non-delay-sensitive service according to a comparing result between the the uplink load of the cell and a load threshold.

15. The base station according to claim 14, further comprising:

> a second activation operation unit, configured to when the first configuration unit (1302) configures the uplink service of the UE into the DTX mode 1 and the uplink load of the cell is within a permitted activation range, perform a mode 1 activation operation on the service of the UE according to the service type configured by the first service type configuration unit and/or the second service type configuration unit; and/or
> a second deactivation operation unit, configured to, when the first configuration unit (1302) configures the uplink service of the UE into the DTX mode 1 and the uplink load of the cell is within a permitted deactivation range, perform a mode 1 deactivation operation on the service of the UE according to the service type configured by the first service type configuration unit and/or the second service type configuration unit.

**Patentansprüche**

1. Dienstkonfigurationsverfahren, durchgeführt von einer Basisstation, **dadurch gekennzeichnet, dass** es Folgendes umfasst:

> Erfassen (S101) einer Aufwärtslast einer Zelle, zu der eine Benutzerausrüstung, UE, gehört; und
> Konfigurieren (S 102) eines Aufwärtsdienstes der UE in einen diskontinuierlichen Übertragungs- bzw. DTX-Modus 1, wenn die Aufwärtslast der Zelle höher ist als ein erster Last-Schwellenwert, wobei der DTX-Modus 1 ein Modus ist, in dem nur Daten strikt in einem Burst-Zeitschlitz jedes Zyklus zu übertragen sind.

2. Dienstkonfigurationsverfahren nach Anspruch 1, weiter Folgendes umfassend:

> Konfigurieren (S 103) des Aufwärtsdienstes der UE in einen DTX-Modus 2, wenn die Aufwärtslast der Zelle niedriger ist als ein im Voraus eingestellter zweiter Last-Schwellenwert, wobei der DTX-Modus 2 ein Modus ist, in dem, wenn keine Daten übertragen werden und Nichtdatenübertragungszeit einen bestimmten Schwellenwert übersteigt, neue Daten in einem Burst-Zeitschlitz eines nächsten Zyklus zu übertragen sind; und wenn Daten übertragen werden, die Übertragung kontinuierlich durchgeführt wird, bis die Daten vollständig übertragen sind, und der zweite Last-Schwellenwert kleiner als der oder gleich dem ersten Last-Schwellenwert ist.

3. Dienstkonfigurationsverfahren nach Anspruch 1, wobei, wenn der Aufwärtsdienst der UE in den DTX-Modus 1 konfiguriert wird, das Verfahren weiter Folgendes umfasst:

> Konfigurieren (S305) des Aufwärtsdienstes der UE in einen DTX-Modus 2, wenn die Aufwärtslast der Zelle niedriger ist als ein dritter Last-Schwellenwert, wobei der dritte Last-Schwellenwert kleiner als der oder gleich dem ersten Last-Schwellenwert ist und der DTX-Modus 2 ein Modus ist, in dem, wenn keine Daten übertragen werden und Nichtdatenübertragungszeit einen bestimmten Schwellenwert übersteigt, neue Daten in einem Burst-Zeitschlitz eines nächsten Zyklus zu übertragen sind; und wenn Daten übertragen werden, die Übertragung kontinuierlich durchgeführt wird, bis die Daten vollständig übertragen sind.

4. Dienstkonfigurationsverfahren nach Anspruch 3, wobei, wenn der Aufwärtsdienst der UE in den DTX-Modus 2 konfiguriert wird, das Verfahren weiter Folgendes umfasst:

> Konfigurieren (S306) des Aufwärtsdienstes der UE in den DTX-Modus 1, wenn die Aufwärtslast der Zelle höher ist als ein vierter Last-Schwellenwert, wobei der vierte Last-Schwellenwert größer als der oder gleich dem dritten Last-Schwellenwert ist und kleiner als der oder gleich dem ersten Last-Schwellenwert ist.

5. Dienstkonfigurationsverfahren nach einem der Ansprüche 2 bis 4, weiter Folgendes umfassend:

Konfigurieren eines Diensttyps des Aufwärtsdienstes der UE als ein geplanter Aufwärtsdienst oder ein nicht geplanter Aufwärtsdienst gemäß einem Vergleichsergebnis zwischen der Aufwärtslast der Zelle und einem Last-Schwellenwert; und/oder
Konfigurieren eines Diensttyps des Abwärtsdienstes der UE als ein verzögerungsempfindlicher Abwärtsdienst oder ein nicht verzögerungsempfindlicher Abwärtsdienst gemäß einem Vergleichsergebnis zwischen der Aufwärtslast der Zelle und einem Last-Schwellenwert.

6. Dienstkonfigurationsverfahren nach Anspruch 5, wobei, wenn der Aufwärtsdienst der UE in den DTX-Modus 1 konfiguriert ist, das Verfahren weiter Folgendes umfasst:

Durchführen der DTX-Modus-1-Deaktivierungsoperation gemäß dem konfigurierten Diensttyp des Aufwärtsdienstes der UE, wenn die Aufwärtslast der Zelle in einem zulässigen Deaktivierungsbereich ist; und/oder
Durchführen der DTX-Modus-1-Aktivierungsoperation gemäß dem konfigurierten Diensttyp des Aufwärtsdienstes der UE, wenn die Aufwärtslast der Zelle in einem zulässigen Aktivierungsbereich ist.

7. Dienstkonfigurationsverfahren nach Anspruch 6, wobei das Durchführen der DTX-Modus-1-Deaktivierungsoperation gemäß dem konfigurierten Diensttyp des Aufwärtsdienstes der UE, wenn die Aufwärtslast der Zelle in dem zulässigen Deaktivierungsbereich ist, Folgendes umfasst:

Konfigurieren (S504) aller Aufwärtsdienste der UE in DTX-Modus-1-Deaktivierungszustände, wenn mindestens ein Aufwärtsdienst der UE einer im Voraus eingestellten DTX-Modus-1-Deaktivierungsbedingung entspricht.

8. Dienstkonfigurationsverfahren nach Anspruch 7, wobei, wenn der Aufwärtsdienst der UE als der geplante Aufwärtsdienst konfiguriert ist, die im Voraus eingestellte DTX-Modus-1-Deaktivierungsbedingung folgende ist: TEBS > max(Veffective×T, Vgbr×T), wobei TEBS gesamte erweiterte dedizierte Kanal- bzw. E-DCH-Pufferstatusinformationen ist, Veffective eine effektive Rate im Moment des Empfangs einer Nachricht, die die TEBS enthält, ist, Vgbr eine garantierte Rate der Aufwärtsstrecke der Zelle ist und T einen Beurteilungszyklus repräsentiert.

9. Dienstkonfigurationsverfahren nach Anspruch 7, wobei, wenn der Aufwärtsdienst der UE als nicht geplanter Aufwärtsdienst konfiguriert ist, die im Voraus eingestellte DTX-Modus-1-Deaktivierungsbedingung folgende ist: die in einem ersten Zyklus erfasste Zahl des Paketverlusts ist größer als ein eingestellter Wert, wobei der Paketverlust durch Erreichen der maximalen Zahl von Übertragungshäufigkeiten verursacht wird.

10. Basisstation, **dadurch gekennzeichnet, dass** sie eine Lastbeurteilungseinheit und eine erste Konfigurationseinheit umfasst;
wobei die Lastbeurteilungseinheit (1301) konfiguriert ist, eine Aufwärtslast einer Zelle, zu der eine Benutzerausrüstung bzw. UE gehört, zu erfassen, und eine erste Konfigurationseinheit auszulösen, wenn die Aufwärtslast höher ist als ein eingestellter erster Last-Schwellenwert; und
die erste Konfigurationseinheit (1302) konfiguriert ist, einen Aufwärtsdienst der UE in einen diskontinuierlichen Aufwärtsübertragungs- bzw. DTX-Modus 1 gemäß dem Auslösen der Lastbeurteilungseinheit zu konfigurieren, wobei der DTX-Modus 1 ein Modus ist, in dem nur Daten strikt in einem Burst-Zeitschlitz jedes Zyklus zu übertragen sind.

11. Basisstation nach Anspruch 10, weiter eine zweite Konfigurationseinheit umfassend, wobei die Lastbeurteilungseinheit (1301) weiter konfiguriert ist, die zweite Konfigurationseinheit auszulösen, wenn die Aufwärtslast niedriger ist als ein eingestellter zweiter Last-Schwellenwert, wobei der zweite Last-Schwellenwert kleiner als der oder gleich dem ersten Last-Schwellenwert ist; und
die zweite Konfigurationseinheit (1303) konfiguriert ist, den Aufwärtsdienst der UE in einen DTX-Modus 2 gemäß dem Auslösen der Lastbeurteilungseinheit zu konfigurieren, wobei der DTX-Modus 2 ein Modus ist, in dem, wenn keine Daten übertragen werden und Nichtdatenübertragungszeit einen bestimmten Schwellenwert übersteigt, neue Daten in einem Burst-Zeitschlitz eines nächsten Zyklus zu übertragen sind; und wenn Daten übertragen werden, die Übertragung kontinuierlich durchgeführt wird, bis die Daten vollständig übertragen sind.

12. Basisstation nach Anspruch 10, weiter eine dritte Konfigurationseinheit (1401) umfassend, die konfiguriert ist, den Aufwärtsdienst der UE in einen DTX-Modus 2 zu konfigurieren, wenn die erste Konfigurationseinheit den Aufwärtsdienst der UE in den DTX-Modus 1 konfiguriert und die Aufwärtslast der Zelle niedriger ist als ein eingestellter dritter Last-Schwellenwert, wobei der dritte Last-Schwellenwert kleiner als der oder gleich dem ersten Last-Schwellenwert ist und der DTX-Modus 2 ein Modus ist, in dem, wenn keine Daten übertragen werden und Nichtdatenübertragungszeit einen bestimmten Schwellenwert übersteigt, neue Daten in einem Burst-Zeitschlitz eines nächsten Zyklus zu übertragen sind; und wenn Daten übertragen werden, die Übertragung kontinuierlich durchgeführt wird, bis die Daten vollständig übertragen sind.

13. Basisstation nach Anspruch 11, weiter eine vierte Konfigurationseinheit (1501) umfassend, die konfiguriert ist, die UE in den DTX-Modus 1 zu konfigurieren, wenn die zweite Konfigurationseinheit (1303) den Aufwärtsdienst der UE in den DTX-Modus 2 konfiguriert und die Aufwärtslast der Zelle höher ist als ein eingestellter vierter Last-Schwellenwert, wobei der vierte Last-Schwellenwert größer als der oder gleich dem dritten Last-Schwellenwert ist und kleiner als der oder gleich dem ersten Last-Schwellenwert ist.

14. Basisstation nach einem der Ansprüche 11 bis 13, weiter Folgendes umfassend:

eine erste Diensttyp-Konfigurationseinheit, die konfiguriert ist, den Aufwärtsdienst der UE als einen geplanten Aufwärtsdienst oder einen nicht geplanten Aufwärtsdienst gemäß einem Vergleichsergebnis zwischen der Aufwärtslast der Zelle und einem Last-Schwellenwert zu konfigurieren; und/oder eine zweite Diensttyp-Konfigurationseinheit, die konfiguriert ist, einen Abwärtsdienst der UE als einen verzögerungsempfindlichen Abwärtsdienst oder einen nicht verzögerungsempfindlichen Abwärtsdienst gemäß einem Vergleichsergebnis zwischen der Aufwärtslast der Zelle und einem Last-Schwellenwert zu konfigurieren.

15. Basisstation nach Anspruch 14, weiter Folgendes umfassend:

eine zweite Aktivierungsoperationseinheit, die konfiguriert ist, wenn die erste Konfigurationseinheit (1302) den Aufwärtsdienst der UE in den DTX-Modus 1 konfiguriert und die Aufwärtslast der Zelle in einem zulässigen Aktivierungsbereich ist, eine Modus-1-Aktivierungsoperation an dem Dienst der UE gemäß dem durch die erste Diensttyp-Konfigurationseinheit und/oder die zweite Diensttyp-Konfigurationseinheit konfigurierten Diensttyp durchzuführen; und/oder eine zweite Deaktivierungsoperationseinheit, die konfiguriert ist, wenn die erste Konfigurationseinheit (1302) den Aufwärtsdienst der UE in den DTX-Modus 1 konfiguriert und die Aufwärtslast der Zelle innerhalb eines zulässigen Deaktivierungsbereichs ist, eine Modus-1-Deaktivierungsoperation an dem Dienst der UE gemäß dem durch die erste Diensttyp-Konfigurationseinheit und/oder die zweite Diensttyp-Konfigurationseinheit konfigurierten Diensttyp durchzuführen.

**Revendications**

1. Procédé de configuration de service exécuté par une station de base, **caractérisé en ce qu'**il comprend les étapes suivantes :

acquérir (S101) une charge de liaison montante d'une cellule à laquelle un équipement utilisateur, UE, appartient ; et
configurer (S 102) un service de liaison montante de l'UE dans un mode de transmission discontinue, DTX, 1 lorsque la charge de liaison montante de la cellule est supérieure à un premier seuil de charge, le mode DTX 1 étant un mode dans lequel des données doivent uniquement être transmises, strictement, sur un intervalle de temps de rafale de chaque cycle.

2. Procédé de configuration de service selon la revendication 1, comprenant en outre l'étape suivante :

configurer (S103) le service de liaison montante de l'UE dans un mode DTX 2 lorsque la charge de liaison montante de la cellule est inférieure à un deuxième seuil de charge prédéfini, le mode DTX 2 étant un mode dans lequel, lorsqu'aucune donnée n'est transmise, et qu'un temps de transmission sans données excède un certain seuil,
de nouvelles données doivent être transmises sur un intervalle de temps de rafale d'un cycle suivant ; et si des données sont transmises, la transmission est exécutée de façon continue jusqu'à ce que les données soient complètement transmises, et que le deuxième seuil de charge soit inférieur ou égal au premier seuil de charge.

3. Procédé de configuration de service selon la revendication 1, comprenant en outre, lorsque le service de liaison montante de l'UE est configuré dans le mode DTX 1, l'étape suivante :

configurer (S305) le service de liaison montante de l'UE dans un mode DTX 2 lorsque la charge de liaison montante de la cellule est inférieure à un troisième seuil de charge, le troisième seuil de charge étant inférieur ou égal au premier seuil de charge et le mode DTX 2 étant un mode dans lequel, lorsqu'aucune donnée n'est transmise, et qu'un temps de transmission sans données excède un certain seuil, de nouvelles données doivent être transmises sur un intervalle de temps de rafale d'un cycle suivant ; et si des données sont transmises, la transmission est exécutée de façon continue jusqu'à ce que les données soient complètement transmises.

4. Procédé de configuration de service selon la revendication 3, comprenant en outre, lorsque le service de liaison montante de l'UE est configuré dans le mode DTX 2, l'étape suivante :

configurer (S306) le service de liaison montante de l'UE dans le mode DTX 1 lorsque la charge de liaison montante de la cellule est supérieure à un quatrième seuil de charge, le quatrième seuil de charge étant supérieur ou égal au troisième seuil de charge, et étant inférieur ou égal au premier seuil de charge.

5. Procédé de configuration de service selon l'une quelconque des revendications 2 à 4, comprenant en outre les étapes suivantes :

configurer un type de service du service de liaison montante de l'UE comme un service planifié de liaison montante ou un service non planifié de liaison montante selon un résultat de comparaison entre la charge de liaison montante de la cellule et un seuil de charge ; et/ou configurer un type de service de service de liaison descendante de l'UE comme un service sensible au retard de liaison descendante ou un service non sensible au retard de liaison descendante selon un résultat de comparaison entre la charge de liaison montante de la cellule et un seuil de charge.

6. Procédé de configuration de service selon la revendication 5, comprenant en outre, lorsque le service de liaison montante de l'UE est configuré dans le mode DTX 1, les étapes suivantes :

exécuter l'opération de désactivation du mode DTX 1 selon le type de service configuré du service de liaison montante de l'UE lorsque la charge de liaison montante de la cellule est comprise dans des limites de désactivation permises ; et/ou exécuter l'opération d'activation du mode DTX 1 selon le type de service configuré du service de liaison montante de l'UE lorsque la charge de liaison montante de la cellule est comprise dans des limites d'activation permises.

7. Procédé de configuration de service selon la revendication 6, dans lequel l'étape consistant à exécuter l'opération de désactivation du mode DTX 1 selon le type de service configuré du service de liaison montante de l'UE lorsque la charge de liaison montante de la cellule est comprise dans les limites de désactivation permises comprend :

configurer (S504) tous les services de liaison montante de l'UE dans des états de désactivation du mode DTX 1 lorsqu'au moins un service de liaison montante de l'UE répond à une condition de désactivation prédéfinie du mode DTX 1.

8. Procédé de configuration de service selon la revendication 7, dans lequel lorsque le service de liaison montante de l'UE est configuré comme le service planifié de liaison montante, la condition de désactivation prédéfinie du mode DTX 1 est : TEBS > max (Veffective$\Box$T, Vgbr$\Box$T), TEBS étant des informations d'état de mémoire tampon de canal dédié avancé, E-DCH, total, Veffective étant un taux effectif au moment de la réception d'un message contenant le TEBS, Vgbr étant un taux garanti de la liaison montante de la cellule, et T représentant un cycle de jugement.

9. Procédé de configuration de service selon la revendication 7, dans lequel lorsque le service de liaison montante de l'UE est configuré comme le service non planifié de liaison montante, la condition de désactivation prédéfinie du mode DTX 1 est : le nombre de pertes de paquets acquis dans un premier cycle est supérieur à une valeur définie, la perte de paquets étant causée en atteignant le nombre maximum de temps de transmission.

10. Station de base, **caractérisée en ce qu'**elle comprend une unité de jugement de charge et une première unité de configuration ; l'unité de jugement de charge (1301) étant configurée pour acquérir une charge de liaison montante d'une cellule à laquelle un équipement utilisateur, UE, appartient et déclencher une première unité de configuration lorsque la charge de liaison montante est supérieure à un premier seuil de charge défini ; et la première unité de configuration (1302) étant configurée pour configurer un service de liaison montante de l'UE dans un mode de transmission discontinue, DTX, de liaison montante 1, selon le déclenchement de l'unité de jugement de charge, le mode DTX 1 étant un mode dans lequel des données doivent être uniquement transmises, strictement, sur un intervalle de temps de rafale de chaque cycle.

11. Station de base selon la revendication 10, comprenant en outre une deuxième unité de configuration :

l'unité de jugement de charge (1301) étant en outre configurée pour déclencher la deuxième unité de configuration lorsque la charge de liaison montante est inférieure à un deuxième seuil de charge défini, le deuxième seuil de charge étant inférieur ou égal au premier seuil de charge ; et

la deuxième unité de configuration (1303) étant configurée pour configurer le service de liaison montante de l'UE dans un mode DTX 2 selon le déclenchement de l'unité de jugement de charge, le mode DTX 2 étant un mode dans lequel, lorsqu'aucune donnée n'est transmise, et qu'un temps de transmission sans données excède un certain seuil, de nouvelles données doivent être transmises sur un intervalle de temps de rafale d'un cycle suivant ; et si des données sont transmises, la transmission est exécutée de façon continue jusqu'à ce que les données soient complètement transmises.

**12.** Station de base selon la revendication 10, comprenant en outre une troisième unité de configuration (1401), configurée pour configurer le service de liaison montante de l'UE dans un mode DTX 2 lorsque la première unité de configuration configure le service de liaison montante de l'UE dans le mode DTX 1 et que la charge de liaison montante de la cellule est inférieure à un troisième seuil de charge défini, le troisième seuil de charge étant inférieur ou égal au premier seuil de charge et le mode DTX 2 étant un mode dans lequel, lorsqu'aucune donnée n'est transmise, et qu'un temps de transmission sans données excède un certain seuil, de nouvelles données doivent être transmises sur un intervalle de temps de rafale d'un cycle suivant ; et si des données sont transmises, la transmission est exécutée de façon continue jusqu'à ce que les données soient complètement transmises.

**13.** Station de base selon la revendication 11, comprenant en outre une quatrième unité de configuration (1501), configurée pour configurer l'UE dans le mode DTX 1 lorsque la deuxième unité de configuration (1303) configure le service de liaison montante de l'UE dans le mode DTX 2 et que la charge de liaison montante de la cellule est supérieure à un quatrième seuil de charge défini, le quatrième seuil de charge étant supérieur ou égal au troisième seuil de charge, et étant inférieur ou égal au premier seuil de charge.

**14.** Station de base selon l'une quelconque des revendications 11 à 13, comprenant en outre :

une première unité de configuration de type de service, configurée pour configurer le service de liaison montante de l'UE comme un service planifié de liaison montante ou un service non planifié de liaison montante selon un résultat de comparaison entre la charge de liaison montante de la cellule et un seuil de charge ; et/ou une deuxième unité de configuration de type de service, configurée pour configurer un service de liaison descendante de l'UE comme un service sensible au retard de liaison descendante ou un service non sensible au retard de liaison descendante selon un résultat de comparaison entre la charge de liaison montante de la cellule et un seuil de charge.

**15.** Station de base selon la revendication 14, comprenant en outre :

une deuxième unité d'opération d'activation, configurée pour, lorsque la première unité de configuration (1302) configure le service de liaison montante de l'UE dans le mode DTX 1 et que la charge de liaison montante de la cellule est comprise à l'intérieur de limites d'activation permises, exécuter une opération d'activation de mode 1 sur le service de l'UE selon le type de service configuré par la première unité de configuration de type de service et/ou la deuxième unité de configuration de type de service ; et/ou

une deuxième unité d'opération de désactivation, configurée pour, lorsque la première unité de configuration (1302) configure le service de liaison montante de l'UE dans le mode DTX 1 et que la charge de liaison montante de la cellule est comprise à l'intérieur de limites de désactivation permises, exécuter une opération de désactivation de mode 1 sur le service de l'UE selon le type de service configuré par la première unité de configuration de type de service et/ou la deuxième unité de configuration de type de service.

S101

Calculate an uplink
load of a cell of a UE

Higher than a first
load threshold

Lower than a second
load threshold

Configure a service in an
uplink of the UE into a
DTX mode 1

S102

Configure a uplink
service of the UE into a
DTX mode 2

S103

FIG. 1

FIG. 2

FIG. 3

S401. Select a part of UEs to perform DTX activation operation, and prohibit all of the UEs from performing DTX deactivation operation

Uplink load

Activate DTX Hysteresis

DTX forced activation load threshold

S402, S403 Re-select a part of the UEs to perform the DTX activation operation when the current load is still higher than the "DTX forced activation load threshold"

T

S404. Permit the UE to perform the DTX deactivation operation

Permitted DTX deactivation load threshold

Deactivate DTX Hysteresis

Time t

FIG. 4

Acquire TEBS information in a last reported SI message — S501

Acquire an effective rate Veffective at the moment of receiving the SI message and a guaranteed rate Vgbr of an uplink of a cell of a current service — S502

No ← TEBS>
Max (Veffective×T, Vgbr×T)? — S503

Yes

Add HS-SCCH signaling (carrying DTX mode 1 deactivation/DRX mode 1 deactivation indication information) into an HS-SCCH signaling outgoing queue, mark a current time stamp, and at the same time set the DTX mode 1 state of all uplink services as the deactivation state, and set the DRX mode 1 state of all services in the downlink as the deactivation state — S504

End

FIG. 5

**FIG. 6**

```
┌─────────────────────────────┐
│  Acquiring the number Nfail of │
│   packet loss which is led by  │ ─── S701
│ reachable of the maximum number│
│    of transmission times       │
└─────────────────────────────┘
                │
                ▼
        ╱─────────────╲
  No   ╱   Whether      ╲
 ─────╱ Nfail is greater than a set╲ ─── S702
      ╲    value x in    ╱
       ╲   a cycle T1?  ╱
        ╲─────────────╱
                │
               Yes
                │
                ▼
┌─────────────────────────────┐
│  Add HS-SCCH signaling (carrying DTX mode 1 │
│  deactivation/DRX mode 1 deactivation indication │
│  information) into an HS-SCCH signaling outgoing │ ─── S703
│  queue, mark a current time stamp, and at the same │
│  time set the DTX mode 1 state of all services in the │
│  uplink as the deactivation state, and set the DRX │
│  mode 1 state of all services in the downlink as the │
│            deactivation state              │
└─────────────────────────────┘
                │
                ▼
            ╭─────────╮
            │   End   │
            ╰─────────╯
```

FIG. 7

Acquiring the number Nfail of packet loss which is led by reachable of the maximum number of transmission times ⟋ S801

No

Whether Nfail is smaller than or equal to a set value y in a cycle T2? ⟋ S802

Yes

⟋ S803
Whether the states of other services in the uplink are the DTX mode 1 activation state?

Completely the DTX mode 1 activation state

Not completely the DTX mode 1 activation state

Add HS-SCCH signaling (carrying DTX activation/ DRX deactivation indication information) into an HS-SCCH signaling outgoing queue, and mark a current time stamp ⟋ S804

Set the DTX mode 1 state of the uplink non-scheduled service as the activation state ⟋ S805

End

FIG. 8

Acquire the number Numdiscard of
MAC-d PDUs discarded due to the
exceeding of the Discard Time

S901

Whether the number
of the MAC-d PDUs discarded due to the
exceeding of the Discard Time in a cycle T3 is
greater than a set number m?

S902

No

Yes

Whether the DTX
mode 1 state of the downlink delay-sensitive
service in the uplink of the cell of the UE is
the activation state?

S903

No

Yes

Add HS-SCCH signaling (carrying DTX mode 1 activation/
DRX mode 1 deactivation indication information) into an
HS-SCCH signaling outgoing queue, mark a current time
stamp, and at the same time set the state of all services in
the downlink as the DRX mode 1 deactivation state

S904

End

FIG. 9

Acquire the number Numdiscard of MAC-d PDUs discarded due to the exceeding of the Discard Time ⟋ S1001

Whether the number of the MAC-d PDUs discarded due to the exceeding of the Discard Time in a cycle T4 is smaller than a set number n? ⟋ S1002

No

Yes

Whether the DTX mode 1 state of the downlink delay-sensitive service in the uplink of the UE is the activation state? ⟋ S1003

No

Yes

Whether The states of other services in the downlink of the UE are the DRX mode 1 activation state? ⟋ S1004

Completely the DRX mode 1 activation state

Not completely the DRX mode 1 activation state

Add HS-SCCH signaling (carrying DTX mode 1 activation/DRX mode 2 deactivation indication information) into an HS-SCCH signaling outgoing queue, mark a current time stamp, and at the same time set the DRX mode 1 state of all services in the downlink as the deactivation state ⟋ S1005

Set the DRX mode 1 state of the downlink time delay sensitive service as the activation state ⟋ S1006

End

FIG. 10

Acquire a state of an MAC-d queue / S1101

Whether the MAC-d queue is in an H state for at least once in a cycle T5? / S1102

No

Yes

Whether the DTX Mode 1 state of the downlink non-delay-sensitive service in the uplink of the UE is the activation state? / S1103

No

Yes / S1104

Add HS-SCCH signaling (carrying DTX mode 1 activation/DRX mode 1 deactivation indication information) into an HS-SCCH signaling outgoing queue, mark a current time stamp, and at the same time set the DRX mode 1 state of all services in the downlink of the UE as the deactivation state

End

FIG. 11

Acquire a state of an MAC-d queue — S1201

Whether the MAC-d Queue is in an L state or a bottom-touched state in a cycle T6 all along? — S1202

No

Yes

Whether the DTX mode 1 state of the non-delay-sensitive service in the uplink of the UE is the activation state? — S1203

No

Yes

Whether the states of the other services in the downlink of the UE are the DRX mode 1 activation state? — S1204

Completely the DRX mode 1 activation state

Not completely the DRX mode 1 activation state

Add HS-SCCH signaling (carrying DTX mode 1 activation/ DRX mode 1 activation indication information) into an HS-SCCH signaling outgoing queue, and mark a current time stamp — S1205

Set the DRX mode 1 state of the non-time delay sensitive service as the activation state — S1206

End

FIG. 12

First configuration unit / 1302

Load judgment unit / 1301

Second configuration unit / 1303

FIG. 13

Third configuration unit / 1401

First configuration unit / 1302

Load judgment unit / 1301

Second configuration unit / 1303

FIG. 14

Third configuration unit /1401

First configuration unit /1302

Load judgment unit /1301

Second configuration unit /1303

Fourth configuration unit /1501

FIG. 15

Third configuration unit /1401

First configuration unit /1302

Fifth configuration unit /1601

Load judgment unit /1301

Second configuration unit /1303

Sixth configuration unit /1602

Fourth configuration unit /1501

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007025138 A2

- US 20080123548 A1